# EUROPEAN PATENT APPLICATION

(11) **EP 4 027 135 A1**
(43) Date of publication of application: **13.07.2022**
(21) Application number: 22150304.8
(22) Date of filing: 05.01.2022
(51) Int. Cl.: G01N 23/04

(54) **X-RAY INSPECTION SYSTEM, X-RAY INSPECTION DEVICE, AND X-RAY INSPECTION METHOD**

(30) Priority: 08.01.2021 JP 2021002308
(71) Applicant: ISHIDA CO., Ltd., Kyoto-shi, Kyoto 606-8392 (JP)
(72) Inventor: SUGIMOTO, Kazuyuki, Ritto-shi, Shiga, 520-3026 (JP); KUDO, Daisuke, Ritto-shi, Shiga, 520-3026 (JP)
(74) Representative: Global IP Europe Patentanwaltskanzlei

(57) **Abstract**

**PROBLEM TO BE SOLVED BY THE INVENTION**

An object of the present invention is to suppress the number of rejected good-quality products in an X-ray inspection system in which articles assessed to be poor quality are rejected.

**SOLUTION**

A X-ray inspection system 100 includes a conveying unit 10 that continuously conveys inspected objects at random positions, an X-ray irradiator 22 that irradiates the conveying unit with X-rays, a line sensor 24 that senses X-rays transmitted through the inspected objects, an image generation unit 28b that generates a transmitted X-ray image based on a sensing result from the line sensor, an inspection unit 28c that inspects for poor quality in the inspected objects based on the transmitted X-ray image, a position information generation unit 28e that generates position information E relating to positions of the inspected objects on the conveying unit determined to be poor quality, a robot 30 that take the inspection objects P away from the conveying unit with a suction ejector, and a robot control unit 40 that controls the action of the robot. The robot control unit, based on the position information and a fixed-interval reference signal S issued every time the conveying unit advances a first distance, controls the action of the robot so that the suction ejector comes near to and takes away the inspected objects determined to be poor quality.

## Description

### TECHNICAL FIELD

The present invention relates to an X-ray inspection system, and more specifically, relates to an X-ray inspection system in which a large number of articles continuously conveyed by a conveying unit are subjected to X-ray inspection, and as a result of the X-ray inspection, articles assessed to be poor quality are rejected from the conveying unit. The present invention also relates to an X-ray inspection apparatus and an X-ray inspection method that are used in the X-ray inspection system.

### BACKGROUND ART

There are known in the prior art X-ray inspection systems in which an X-ray inspection is performed on a large number of articles continuously conveyed in random positions by a conveying unit, and articles assessed to be poor quality (referred to hereinafter as poor-quality products) are rejected from the conveying unit by, for example, an arm-type rejection apparatus. In such an X-ray inspection system, there is a risk that even if, for example, there is only one poor-quality product, articles on the conveying unit that surround that poor-quality product and that are not assessed to be poor quality (referred to hereinafter as good-quality products) will also be rejected in a large amount.

In the X-ray inspection system of Patent Literature 1 (Japanese Laid-open Patent Publication No. 2004-279059), to reduce the number of rejected good-quality articles, a plurality of inspection regions are established in a direction orthogonal to the conveying direction of the conveying unit, an arm-type rejection apparatus is provided separately for each of the inspection regions, and only the rejection apparatus corresponding to the inspection region containing a poor-quality product is activated.

The X-ray inspection system of Patent Literature 1 (Japanese Laid-open Patent Publication No. 2004-279059) makes it possible for the number of good-quality products rejected from the conveying unit to be less than when a single arm-type rejection apparatus is provided for all of the inspection regions.

### SUMMARY OF THE INVENTION

### <Technical Problem>

However, even in the X-ray inspection system of Patent Literature 1 (Japanese Laid-open Patent Publication No. 2004-279059), there is a risk that a considerable number of good-quality products will still be rejected.

It is an object of the present invention to provide an X-ray inspection system in which an X-ray inspection is performed on a large number of articles continuously conveyed by a conveying unit, and as a result of the X-ray inspection, articles assessed to be poor quality are rejected from the conveying unit, the X-ray inspection system being capable of suppressing the number of rejected good-quality products.

It is another object of the present invention to provide an X-ray inspection apparatus and an X-ray inspection method that are used in such an X-ray inspection system.

### <Solution to Problem>

An X-ray inspection system according to a first aspect of the present invention includes a conveying unit, an X-ray irradiation unit, a transmitted X-ray sensing unit, an image generation unit, an inspection unit, a position information generation unit, a robot, and a first control unit. The conveying unit continuously conveys a large number of articles at random positions. The X-ray irradiation unit irradiates the articles on the conveying unit with X-rays. The transmitted X-ray sensing unit senses X-rays transmitted through the articles. The image generation unit generates a transmitted X-ray image based on a sensing result from the transmitted X-ray sensing unit. The inspection unit inspects for poor quality in the articles based on the transmitted X-ray image. The position information generation unit, based on an inspection result from the inspection unit, generates position information relating to a position of the article determined to be poor quality on the conveying unit. The robot has a removal mechanism for removing the article. The robot is configured to move the removal mechanism in at least a first direction orthogonal to a conveying direction of the conveying unit. The robot, by using the removal mechanism, takes the article determined by the inspection unit to be poor quality away from the conveying unit. The first control unit, based on at least the position information and a fixed-interval reference signal issued every time the conveying unit advances a first distance, controls the action of the robot so that the removal mechanism comes near to and takes away the article determined by the inspection unit to be poor quality.

In the X-ray inspection system according to the first aspect, the amount of good-quality products taken away along with poor-quality products can be reduced because the action of the robot is controlled to take poor-quality products away from the conveying unit based on position information relating to positions of poor-quality products on the conveying unit.

The step in which poor quality in the articles is inspected and position information is generated based on the transmitted X-ray image requires a certain amount of computation and processing time, and the computation and processing time is not the same every time. Therefore, when the robot is controlled according to the timing at which the position information is generated, there is a risk of misalignment between a position where the robot moves to take an article and a position where a poor-quality product is actually present.

As a countermeasure to this, in the X-ray inspection system according to the first aspect, the first control unit controls the robot based on the fixed-interval reference signal issued every time the conveying unit advances a first distance. Therefore, even if there is variation in the computation and processing time required for poor quality in the articles to be inspected and position information to be generated based on the transmitted X-ray image, it is possible to suppress misalignment between a position where the robot moves to take an article and a position where a poor-quality product is actually present.

An X-ray inspection system according to a second aspect of the present invention is the X-ray inspection system according to the first aspect, wherein the robot is also configured to move the removal mechanism in a direction parallel to the conveying direction of the conveying unit.

In the X-ray inspection system according to the second aspect, the removal mechanism can move not only in the first direction orthogonal to the conveying direction, but also in a direction parallel to the conveying direction. Therefore, a plurality of poor-quality products can be removed from the conveying unit without stopping the conveying performed by the conveying unit even when a plurality of poor-quality products are present on the conveying unit in substantially the same position in the conveying direction and in different positions in the first direction.

An X-ray inspection system according to a third aspect of the present invention is the X-ray inspection system according to the first or second aspect, further includes a counting unit. Based on the result of the inspection of the inspection unit, the counting unit counts the number of articles determined to be poor quality and present in a first predetermined region of the conveying unit.

In the X-ray inspection system according to the third aspect, because the number of articles determined to be poor quality and present in the first predetermined region of the conveying unit are counted, it is possible to assess, *inter alia,* that the robot can take away all of the poor-quality products at, for example, the conveying velocity of the conveying unit at the given moment.

An X-ray inspection system according to a fourth aspect of the present invention is the X-ray inspection system according to the third aspect, further includes a velocity control unit. The velocity control unit changes a conveying velocity of the conveying unit. The velocity control unit controls the conveying velocity based on a counting result from the counting unit.

In the X-ray inspection system of the fourth aspect, the conveying velocity of the conveying unit is changed based on the number of poor-quality products present in a predetermined region of the conveying unit, and the conveying velocity can therefore be reduced when, for example, the number of poor-quality products present in the first predetermined region is large and cannot be processed by the robot at the conveying velocity of the given moment. In addition, the conveying velocity can be increased when the number of poor-quality products present in the predetermined region is low and there is leeway in the processing capability of the robot. Therefore, the conveying velocity can be increased and the processing capability of the X-ray inspection system can be improved when the number of poor-quality products present in the predetermined region is low, while realizing a highly reliable X-ray inspection system that does not fail to remove any poor-quality products.

An X-ray inspection system according to a fifth aspect of the present invention is the X-ray inspection system according to the fourth aspect, wherein the image generation unit corrects the transmitted X-ray image in accordance with the conveying velocity of the conveying unit.

The transmitted X-ray image generated, when the conveying velocity of the conveying unit is a certain predetermined velocity (referred to as a reference velocity), by the image generation unit based on the sensing result from the transmitted X-ray sensing unit in a predetermined time interval is provisionally referred to as a reference transmitted X-ray image. It is assumed that only the conveying velocity of the conveying unit is increased or reduced in relation to the reference velocity without changing the distribution of articles on the conveying unit and the transmitted X-rays are sensed by the transmitted X-ray sensing unit at predetermined time intervals, and the image generation unit generates a transmitted X-ray image (referred to as a first transmitted X-ray image) based on the sensing result. In this case, the first transmitted X-ray image is the result of stretching or shrinking the reference transmitted X-ray image in the conveying direction of the conveying unit. Therefore, assuming that the position information generation unit has generated position information based on the first transmitted X-ray image, the distribution of articles on the conveying unit has not changed, but the obtained position information will be different from the position information generated based on the reference transmitted X-ray image.

Accordingly, in the X-ray inspection system of the fifth aspect, the image generation unit corrects the transmitted X-ray image in accordance with the conveying velocity of the conveying unit, and the position information generation unit generates position information based on the corrected transmitted X-ray image. Therefore, in the X-ray inspection system of the fifth aspect, the first control unit can activate the robot at a proper timing irrespective of the conveying velocity of the conveying unit, and poor-quality products can be taken away from the conveying unit with precision.

An X-ray inspection system according to a sixth aspect of the present invention is the X-ray inspection system according to any of the third to fifth aspects, further includes an article removal apparatus and a second control unit. The article removal apparatus collectively takes away the articles present on the conveying unit in a second predetermined region in the conveying direction. The second control unit controls the action of the article removal apparatus. The second control unit activates the article removal apparatus in a case where the number of articles determined to be poor quality and present in the first predetermined region, counted by the counting unit, exceeds a predetermined value.

In the X-ray inspection system of the sixth aspect, poor-quality products can be collectively removed by the article removal apparatus when the number of poor-quality products present in a predetermined region of the conveying unit is comparatively large and cannot be processed by the robot. Therefore, a highly reliable X-ray inspection system that does not fail to remove any poor-quality products can be realized without temporarily stopping the X-ray inspection system (without taking the time required to stop/restart operation of the X-ray inspection system).

An X-ray inspection system according to a seventh aspect of the present invention is the X-ray inspection system according to any of the first to sixth aspects, wherein the first control unit controls the action of the robot such that a movement distance of the removal mechanism that takes away the articles determined to be poor quality reaches a minimum in a case where three or more articles determined to be poor quality are present in a predetermined region of the conveying unit.

In the X-ray inspection system of the seventh aspect, because the removal mechanism is controlled so as to move a minimum distance, a greater number of poor-quality products can be taken away from the conveying unit in the same processing time in comparison to cases in which the movement distance of the removal mechanism is not taken into consideration.

An X-ray inspection system according to an eighth aspect of the present invention is the X-ray inspection system according to any of the first to seventh aspects, wherein at the same point in time, the conveying velocity of the conveying unit in the region irradiated with X-rays by the X-ray irradiation unit and the conveying velocity of the conveying unit in the region where the robot takes away the article are the same.

The X-ray inspection system according to the ninth aspect of the present invention is the X-ray inspection system according to any of the first to eighth aspects, wherein the removal mechanism uses suction to remove the article determined to be poor quality.

In the X-ray inspection system of the ninth aspect, poor-quality products can be quickly removed from the conveying unit.

An X-ray inspection apparatus according to a tenth aspect of the present invention includes a conveying unit, an X-ray irradiation unit, a transmitted X-ray sensing unit, an image generation unit, an inspection unit, a position information generation unit, a first sending unit, and a second sending unit. The conveying unit continuously conveys a large number of articles at random positions. The X-ray irradiation unit irradiates the articles on the conveying unit with X-rays. The transmitted X-ray sensing unit senses X-rays transmitted through the articles. The image generation unit generates a transmitted X-ray image based on a sensing result from the transmitted X-ray sensing unit. The inspection unit inspects for poor quality in the articles based on the transmitted X-ray image. The position information generation unit, based on an inspection result from the inspection unit, generates position information relating to positions of the article determined to be poor quality on the conveying unit . The first sending unit sends a fixed-interval reference signal, which is issued every time the conveying unit advances a first distance, to a control unit that controls the action of a robot. The second sending unit sends the position information to the control unit. The robot has a removal mechanism for removing the article. The robot is configured to move the removal mechanism in at least a first direction orthogonal to a conveying direction of the conveying unit, and by using the removal mechanism, the robot takes the article determined by the inspection unit to be poor quality away from the conveying unit. The control unit controls the action of the robot so that the removal mechanism comes near to and takes away the article determined by the inspection unit to be poor quality.

An X-ray inspection method according to an eleventh aspect of the present invention includes an X-ray irradiation step, a transmitted X-ray sensing step, an image generation step, an inspection step, a position information generation step, a sending step, and a control step. In the X-ray irradiation step, X-rays is irradiated to a conveying unit that continuously conveys a large number of articles at random positions. In the transmitted X-ray sensing step, transmitted X-rays transmitted through the articles are sensed. In the image generation step, a transmitted X-ray image is generated based on a result of sensing the transmitted X-rays. In the inspection step, poor quality in the articles is inspected based on the transmitted X-ray image. In the position information generation step, based on an inspection result from the inspection step, position information relating to a position of the article determined to be poor quality on the conveying unit is generated. In the sending step, the position information and a fixed-interval reference signal issued every time the conveying unit advances a first distance are sent to a control unit that controls the action of a robot. The robot has a removal mechanism for removing the article. The robot is configured to move the removal mechanism in at least a first direction orthogonal to a conveying direction of the conveying unit, and, by using the removal mechanism, take the article determined to be poor quality in the inspection step away from the conveying unit. In the control step, the control unit, based on at least the reference signal and the position information, controls the action of the robot such that the removal mechanism comes near to and takes away the article determined in the inspection step to be poor quality.

### <Effect of the Invention>

In the X-ray inspection system according to the present invention, the amount of good-quality products taken away along with poor-quality products can be reduced because poor-quality products are taken away from the conveying unit by a robot based on position information relating to positions of poor-quality products on the conveying unit.

### BRIEF DESCRIPTION OF THE DRAWINGS

FIG. 1 is a schematic plan view of an X-ray inspection system according to one embodiment of the present invention;
FIG. 2 is a block diagram of the X-ray inspection system of FIG. 1;
FIG. 3 is a schematic front view of the X-ray inspection system of FIG. 1;
FIG. 4 is an external perspective view of a shield box for an X-ray inspection unit of an X-ray inspection apparatus included in the X-ray inspection system of FIG. 1;
FIG. 5 is a simplified structural drawing of the interior of the shield box of FIG. 4;
FIG. 6 is an example of a graph of the quantity of transmitted X-rays sensed by a line sensor of the X-ray inspection unit of the X-ray inspection apparatus of FIG. 4;
FIG. 7 is a drawing of a transmitted X-ray image generated by the X-ray inspection unit of the X-ray inspection apparatus of FIG. 4;
FIG. 8 is a drawing for describing a process of generating position information for the X-ray inspection apparatus included in the X-ray inspection system of FIG. 1, and describing a sequence by which a robot included in the X-ray inspection system removes poor-quality products;
FIG. 9 is a flowchart of a poor-quality product inspection executed by the X-ray inspection system of FIG. 1; and
FIG. 10 is a flowchart of a poor-quality product rejection process during the poor-quality product inspection shown in FIG. 9.

### DESCRIPTION OF EMBODIMENTS

An embodiment of an X-ray inspection system according to the present invention shall be described below with reference to the drawings.

The following embodiment is merely a specific example and is not intended to limit the technical range of the invention. It should be understood that various changes can be made to the following embodiment without deviating from the scope and range of the invention.

The following descriptions sometimes use the expressions "front (front surface)," "rear (back surface)," "upper," "lower," "left," "right," etc., for the sake of convenience in order to represent directions, etc. Unless otherwise specified, the directions indicated by these expressions corresponds with the directions of the arrows shown in the drawings.

### (1) Overall configuration

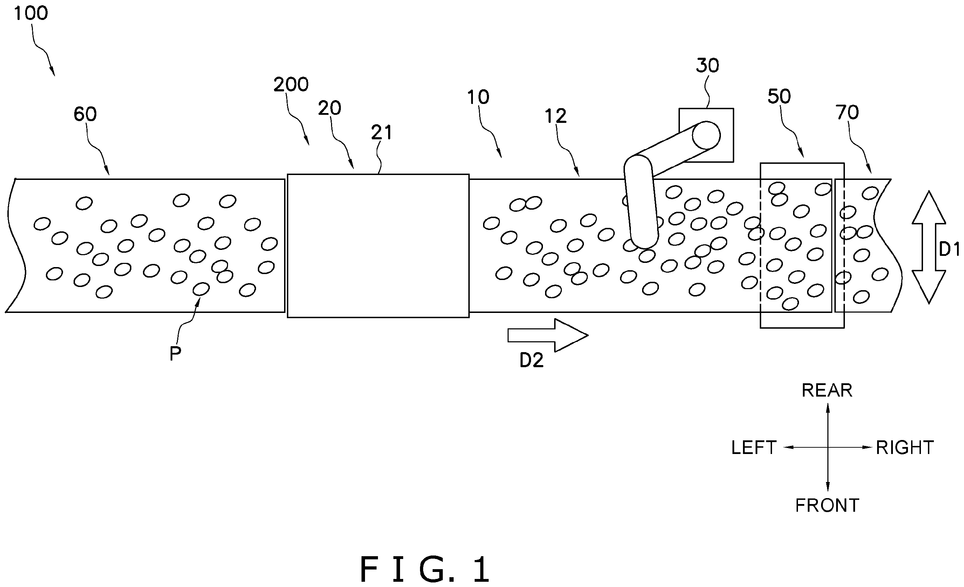

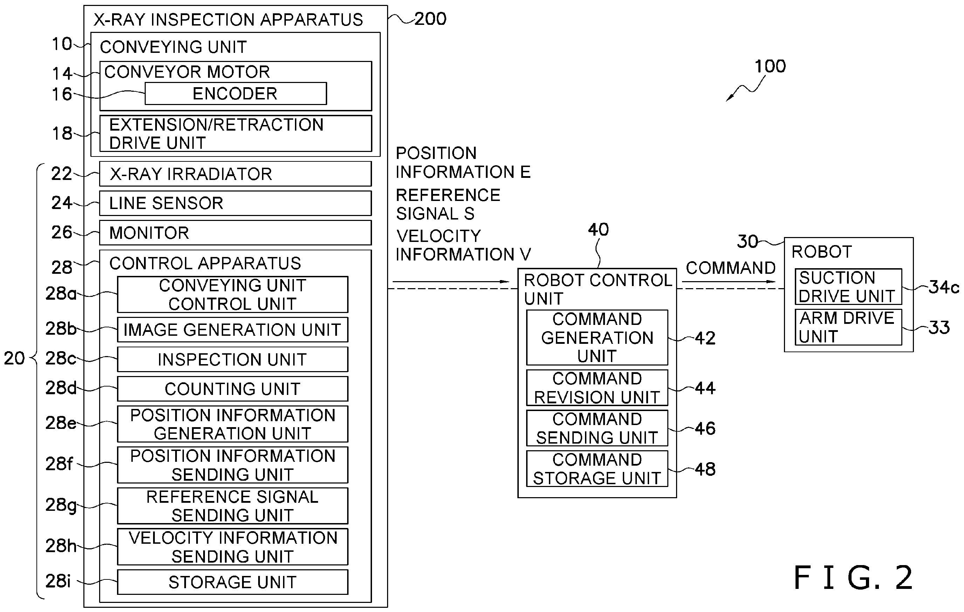

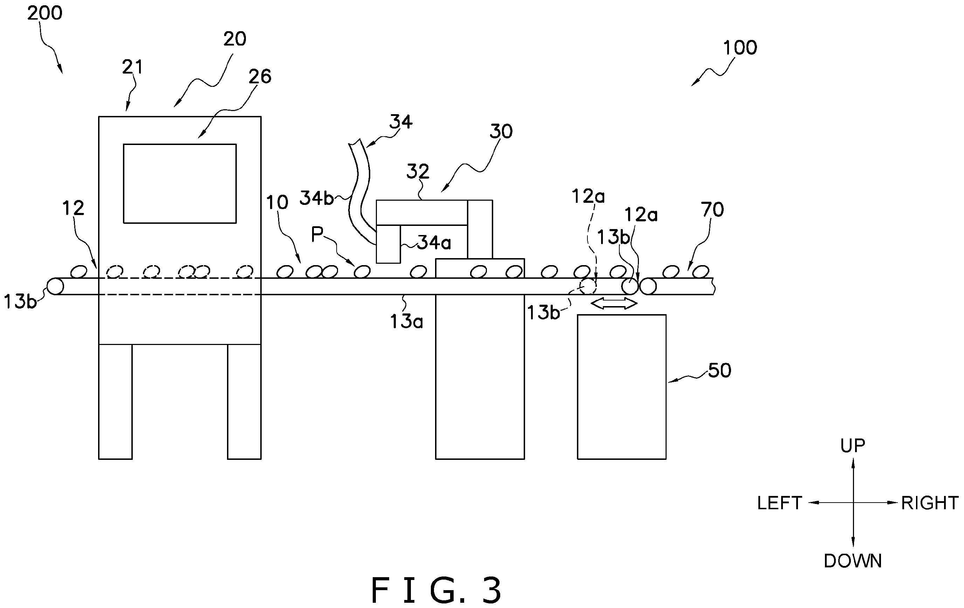

An X-ray inspection system 100 according to one embodiment of the present invention shall be described with reference to FIGS. 1-3. FIG. 1 is a schematic plan view of an X-ray inspection system 100. FIG. 2 is a block diagram of the X-ray inspection system 100. FIG. 3 is a schematic front view of the X-ray inspection system 100.

The X-ray inspection system 100 is a system in which an X-ray inspection is performed on a large number of inspection objects P (articles) continuously conveyed at random positions to sense poor-quality products, inspection objects P determined to be poor-quality products are rejected, and inspection objects P determined to be good-quality products are conveyed to the next process.

The expression "inspection objects P are continuously conveyed" means that inspection objects P are not conveyed intermittently one-by-one with predetermined spaces in between, but that inspection objects P are continuously conveyed (without intentional spacing).

The expression "inspection objects P are conveyed at random positions" means that, in a plan view, the inspection objects P are conveyed in a state of having been distributed to random positions on a flat surface spreading out in a direction D2 in which the inspection objects P are conveyed and a direction orthogonal to the conveying direction (referred to as a first direction D1) (see FIG. 1). In short, the inspection objects P are not conveyed at the same position in the first direction D1, but are conveyed at any position in a range having a predetermined width (a width of a conveyor belt 13a of a conveying unit 10 in forward-backward-direction, described hereinafter). In addition, inspection objects P are not conveyed at an established distance apart from each other in the conveying direction D2, but are conveyed in any positional relationship. For example, there are cases in which two or more inspection objects P are conveyed at the same position in the conveying direction D2 (in other words, at the same timing).

The inspection objects P in the present embodiment are pieces of chicken meat. Chicken meat is not provided by way of limitation as to the type of the inspection objects P; the inspection objects P may be food products other than chicken meat, or articles other than food products.

The X-ray inspection in the present embodiment is an inspection that detects foreign objects (e.g., in the present embodiment, bone fragments, etc.) in the inspection objects P, and determines inspection objects P including foreign objects to be poor-quality products (foreign object inspection). Inspection objects P, which are determined to not include foreign objects as a result of the foreign object inspection, are determined to be good-quality products. To avoid complicating the description below, inspection objects P determined to be poor-quality products as a result of the foreign object inspection are sometimes referred to simply as "poor-quality products," and inspection objects P determined to be good-quality products (not determined to be poor-quality products) are sometimes referred to simply as "good-quality products."

The foreign object inspection is merely one example of the X-ray inspection; the X-ray inspection may be an inspection other than a foreign object inspection. For example, the X-ray inspection may be a dimension inspection in which inspection objects P having a size (surface area of inspection objects P in a transmitted X-ray image) within a predetermined range are determined to be good-quality products, and inspection objects P having a size outside of the predetermined range are determined to be poor-quality products. In addition, for example, the X-ray inspection may be a weight inspection in which inspection objects P having an estimated weight (the weight of the inspection objects P estimated based on a transmitted X-ray image) within a predetermined range are determined to be good-quality products, and inspection objects P having an estimated weight outside of the predetermined range are determined to be poor-quality products. In addition, for example, the X-ray inspection may be a shape inspection in which inspection objects P having no chipping, cracking, or other shape abnormalities are determined to be good-quality products, and inspection objects P having shape abnormalities are determined to be poor-quality products.

The X-ray inspection system 100 mainly includes an X-ray inspection apparatus 200, a robot 30, and a robot control unit 40 (see FIG. 2). The X-ray inspection apparatus 200 mainly has a conveying unit 10 and an X-ray inspection unit 20.

The X-ray inspection apparatus 200 receives inspection objects P conveyed in by an upstream conveying apparatus 60, and conveys the received inspection objects P in the conveying direction D2 on the conveying unit 10 (see FIG. 3). The X-ray inspection unit 20 of the X-ray inspection apparatus 200 performs an X-ray inspection on the inspection objects P conveyed by the conveying unit 10. The conveying unit 10 further conveys the inspection objects P inspected by the X-ray inspection unit 20 in the conveying direction D2, and the inspection objects P are delivered to a downstream conveying apparatus 70 (see FIG. 3).

The robot 30 takes away from the conveying unit 10 the inspection objects P that were determined to be poor-quality products as a result of the inspection performed by the X-ray inspection apparatus 200. The robot 30 has a removal mechanism (in the present embodiment, a suction ejector 34a, described hereinafter) that takes away inspection objects P. The robot 30 brings the removal mechanism near an inspected object P determined to be a poor-quality product, and, using the removal mechanism, takes the inspected object P determined to be a poor-quality product away from the conveying unit 10.

The robot control unit 40 controls the actions of the robot 30 based on at least position information E and a reference signal S (described hereinafter) sent by the X-ray inspection apparatus 200. Particularly, in the present embodiment, the robot control unit 40 controls the actions of the robot 30 based on position information E, a reference signal, and velocity information V (described hereinafter) sent by the X-ray inspection apparatus 200.

### (2) Detailed configuration

Details of the X-ray inspection apparatus 200, the robot 30, and the robot control unit 40 shall be described.

### (2-1) X-ray inspection apparatus

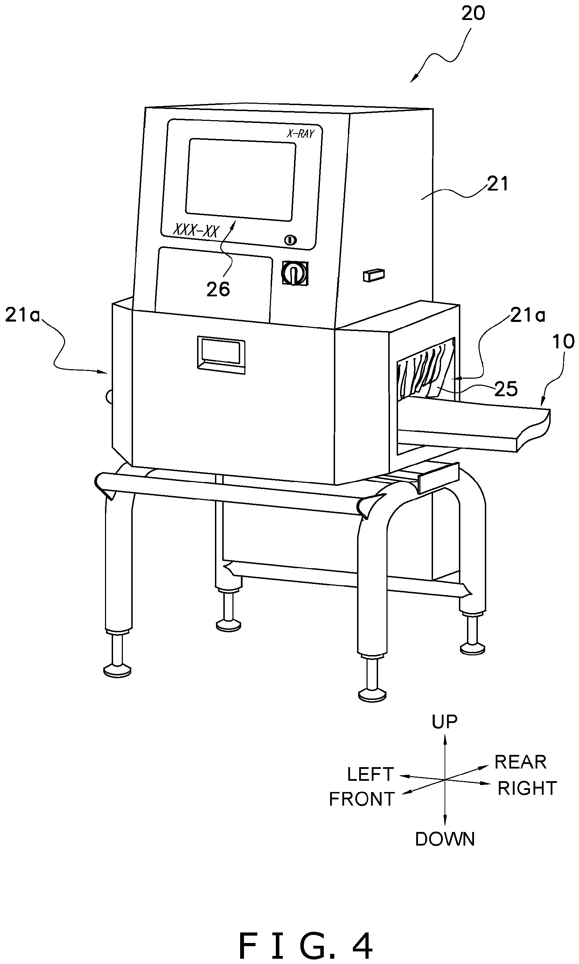

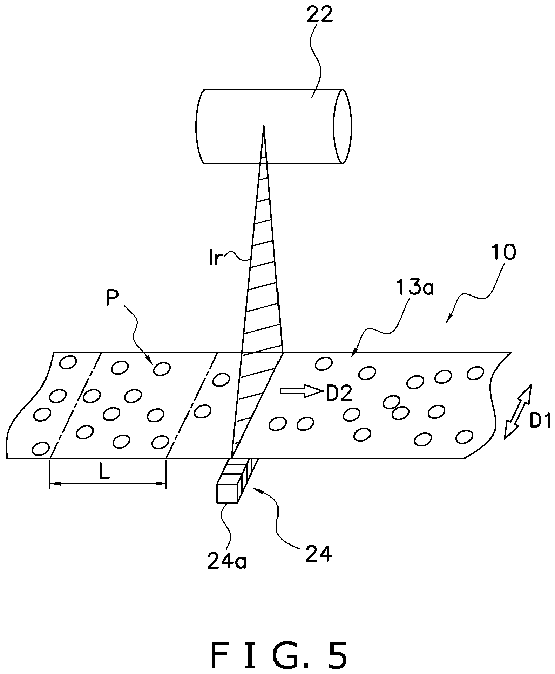

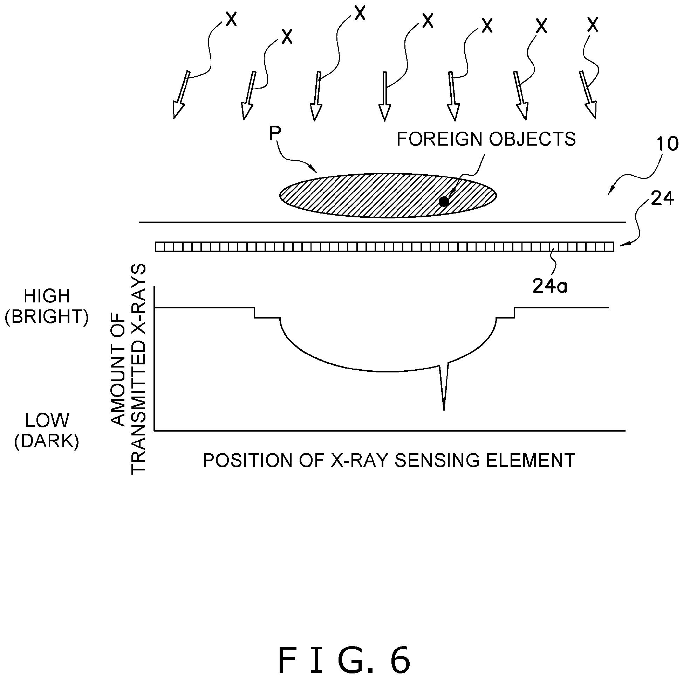

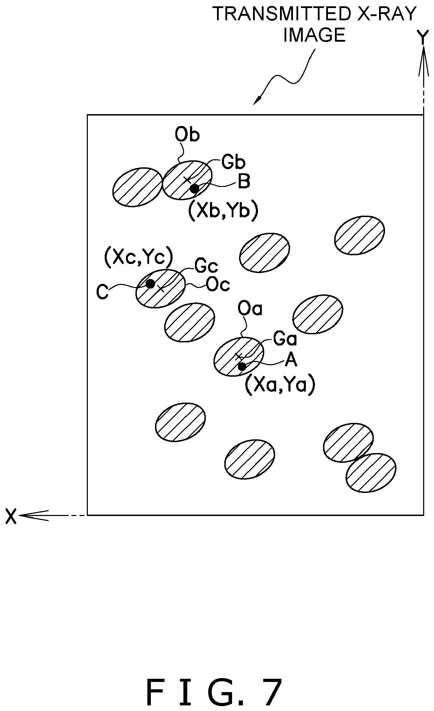

The X-ray inspection apparatus 200 shall be described with reference to FIGS. 4-7 as well, in addition to FIGS. 1-3. FIG. 4 is an external perspective view of a shield box 21 for the X-ray inspection unit 20 of the X-ray inspection apparatus 200. FIG. 5 is a simplified structural drawing of the interior of the shield box 21. FIG. 6 is an example of a graph of the quantity of transmitted X-rays sensed by a line sensor 24 of the X-ray inspection unit 20 of the X-ray inspection apparatus 200 of FIG. 4. FIG. 7 is a drawing of a transmitted X-ray image generated by the X-ray inspection unit 20 of the X-ray inspection apparatus 200.

### (2-1-1) Conveying unit

The conveying unit 10 is one example of a conveying unit that conveys inspection objects P, which are one example of articles. The conveying unit 10 continuously conveys a large number of inspection objects P at random positions.

The conveying unit 10 receives inspection objects P conveyed by the upstream conveying apparatus 60, and conveys the inspection objects P such that the objects pass through the interior of the shield box 21 of the X-ray inspection apparatus 200. In addition, the conveying unit 10 conveys inspection objects P that have passed through the interior of the shield box 21 to the area downstream of the X-ray inspection apparatus 200. The conveying unit 10 conveys inspection objects P that have passed through the interior of the shield box 21 such that the objects pass through the vicinity of the robot 30. Furthermore, the conveying unit 10 delivers inspection objects P that have not been removed by the robot 30 or an article removal apparatus (in the present embodiment, an extension/retraction drive unit 18, described hereinafter), or in other words, inspection objects P determined by the X-ray inspection to be good-quality products, to the downstream conveying apparatus 70 disposed downstream of the conveying unit 10.

There is no limitation on the type of conveying apparatus of the conveying unit 10, but in the present embodiment, the conveying unit 10 has a belt conveyor 12. In the present embodiment, the conveying unit 10 has only one belt conveyor 12, but this example is not provided by way of limitation. For example, the conveying unit 10 may have a plurality of belt conveyors 12 linked to each other and disposed in series along the conveying direction D2. In addition, the conveying unit 10 may have multiple types of conveying apparatuses linked to each other and disposed in series along the conveying direction D2. In the conveying unit 10, at the same point in time, the conveying velocity of the conveying unit 10 in a region irradiated with X-rays by an X-ray irradiator 22 and the conveying velocity of the conveying unit 10 in a region (described in detail hereinafter) where the robot 30 takes away inspection objects P are the same.

The belt conveyor 12 has an endless conveyor belt 13a, rollers 13b around which the conveyor belt 13a is wound, and a conveyor motor 14 (see FIGS. 2 and 3).

At least one of the rollers 13b around which the conveyor belt 13a is wound is driven by the conveyor motor 14. When the roller 13b is driven by the conveyor motor 14, the conveyor belt 13a rotates and the inspection objects P carried on the conveyor belt 13a are conveyed in the conveying direction D2. In the present embodiment, the conveying direction D2 is rightward.

The conveyor motor 14 is a motor in which the rotational speed can be controlled by an inverter. The rotational speed of the conveyor motor 14 is controlled according to a command from a control apparatus 28 (described hereinafter) of the X-ray inspection apparatus 200. As a result of the rotational speed of the conveyor motor 14 being changed, the conveying velocity of the inspection objects P carried on the conveyor belt 13a is changed.

An encoder 16 is installed in the conveyor motor 14 (see FIG. 2). The encoder 16 detects the distance over which the conveying unit 10 advances (in other words, the distance over which the inspection objects P conveyed by the conveying unit 10 move) and the velocity at which the conveying unit 10 advances (in other words, the velocity at which the inspection objects P conveyed by the conveying unit 10 move). The encoder 16 sends the detected distance and velocity by which the conveying unit 10 advances to the control apparatus 28 of the X-ray inspection apparatus 200.

The belt conveyor 12 of the present embodiment is a shuttle conveyor of variable length. Specifically, the belt conveyor 12 has an extension/retraction drive unit 18 that moves the roller 13b disposed at a downstream end 12a (the end part on the side near the downstream conveying apparatus 70) of the belt conveyor 12 along a direction parallel to the conveying direction D2. The extension/retraction drive unit 18 is one example of an article removal apparatus.

The extension/retraction drive unit 18 switches the state of the belt conveyor 12 between a first state and a second state by moving the roller 13b disposed at the downstream end 12a of the belt conveyor 12 along a direction parallel to the conveying direction D2. When the belt conveyor 12 is in the first state, the downstream end 12a of the belt conveyor 12 is adjacent to the downstream conveying apparatus 70 (see the solid line in FIG. 3). When the belt conveyor 12 is in the second state, the downstream end 12a of the belt conveyor 12 is away from the downstream conveying apparatus 70 (see the broken line in FIG. 3).

When the belt conveyor 12 is in the first state, the inspection objects P conveyed to the downstream end 12a by the belt conveyor 12 are delivered to the downstream conveying apparatus 70.

When the belt conveyor 12 is in the second state, the inspection objects P conveyed to the downstream end 12a of the belt conveyor 12 are not delivered to the downstream conveying apparatus 70, but instead fall into a recovery box 50 disposed underneath the belt conveyor 12 (see FIG. 3). Due to the belt conveyor 12 being put in the second state, inspection objects P present in a second predetermined region in the conveying direction D2 on the conveying unit 10 (on the conveyor belt 13a) can be collectively taken away from the conveying unit 10. The term "second predetermined region" means a region on the conveying unit 10 containing inspection objects P that reach the downstream end 12a of the belt conveyor 12 in the time period when the belt conveyor 12 is in the second state.

### (2-1-2) X-ray inspection unit

The X-ray inspection unit 20 irradiates the inspection objects P conveyed by the conveying unit 10 with X-rays, generates a transmitted X-ray image based on the result of sensing the X-rays transmitted through the inspection objects P, and inspects for poor quality in the inspection objects P based on the transmitted X-ray image.

The X-ray inspection unit 20 mainly has the shield box 21 (see FIG. 4), the X-ray irradiator 22 (see FIG. 5), the line sensor 24 (see FIG. 5), a monitor 26 with a touch panel function (see FIG. 4), and the control apparatus 28 (see FIG. 2).

### (2-1-2-1) Shield box

The shield box 21 is a casing that internally houses the X-ray irradiator 22, the line sensor 24, the control apparatus 28, etc. Disposed in the upper part of the front surface of the shield box 21 are the monitor 26, as well as a key insertion hole, a power source switch, etc. (see FIG. 4). Openings 21a are formed in left and right side surfaces of the shield box 21 (see FIG. 4).

The conveyor belt 13a of the conveying unit 10 is disposed inside the shield box 21 (see FIG. 3). Specifically, the conveyor belt 13a is disposed so as to pass through the openings 21a formed in both side surfaces of the shield box 21. The opening 21a on the upstream side in the conveying direction D2 of the conveying unit 10 functions as a hole for inspection objects P conveyed by the conveyor belt 13a to be conveyed into the shield box 21. The opening 21a on the downstream side in the conveying direction D2 of the conveying unit 10 functions as a hole for inspection objects P conveyed by the conveyor belt 13a to be conveyed out from the shield box 21. The openings 21a are closed by shielding curtains 25 in order to prevent X-rays from leaking to the exterior of the shield box 21 (see FIG. 4). The shielding curtains 25 are made of rubber containing lead, tungsten, etc. The shielding curtains 25 are pushed aside by the inspection objects P when the inspection objects P are conveyed in and out through the openings 21a.

### (2-1-2-2) X-ray irradiator

The X-ray irradiator 22 is one example of an X-ray irradiation unit that irradiates the inspection objects P on the conveying unit 10 with X-rays. The X-ray irradiator 22 is disposed above the conveyor belt 13a in the shield box 21 (see FIG. 5). The X-ray irradiator 22 irradiates X-rays in a fan-shaped irradiation range Ir toward the line sensor 24 disposed below the conveying surface of the conveyor belt 13a (see the hatching part of FIG. 5). The X-ray irradiation range Ir of the X-ray irradiator 22 extends so as to be orthogonal to the surface that conveys inspection objects P on the conveyor belt 13a. In addition, the irradiation range Ir spreads in a fan shape in the first direction D1, which intersects the conveying direction D2 of the conveyor belt 13a. In other words, X-rays radiated from the X-ray irradiator 22 spread in the direction of the width of the conveyor belt 13a.

### (2-1-2-3) Line sensor

The line sensor 24 is one example of a transmitted X-ray sensing unit that senses X-rays transmitted through the inspection objects P.

The line sensor 24 is disposed below the conveying surface of the conveyor belt 13a, and senses X-rays transmitted through the inspection objects P and the conveyor belt 13a. The line sensor 24 mainly has a large number of X-ray-sensing elements 24a. The X-ray-sensing elements 24a are disposed horizontally along the first direction D1 orthogonal to the conveying direction D2 of the conveyor belt 13a, or in other words, along the direction of the width of the conveyor belt 13a (see FIG. 5).

FIG. 6 is a graph of an example of the quantity of transmitted X-rays sensed by the X-ray-sensing elements 24a of the line sensor 24. The horizontal axis of the graph corresponds to the positions of the X-ray-sensing elements 24a. In addition, the horizontal axis of the graph corresponds to positions in the first direction D1 orthogonal to the conveying direction D2 of the conveying unit 10. The vertical axis of the graph represents the quantity of transmitted X-rays sensed by the X-ray-sensing elements 24a. In a transmitted X-ray image generated by the control apparatus 28 based on the sensing result from the line sensor 24, locations with a large quantity of transmitted X-rays are displayed brightly (light) and locations with a small quantity of transmitted X-rays are displayed darkly (shaded). Specifically, the brightness and darkness (light and shade) of the transmitted X-ray image correspond to the sensed quantity of transmitted X-rays. As shown in FIG. 6, when a foreign object is present in an inspected object P, the quantity of transmitted X-rays is less at the position corresponding to the foreign object than in the periphery of that position.

Each X-ray-sensing element 24a senses X-rays transmitted through an inspected object P and the conveyor belt 13a, and outputs an X-ray transmission signal indicating a voltage corresponding to the quantity of sensed transmitted X-rays (the intensity of the X-rays). The X-ray transmission signal is sent to the control apparatus 28 and used to create a transmitted X-ray image of the inspected object P. The control apparatus 28 inspects for poor quality in the inspected object P (in the present embodiment, foreign object contamination) based on the transmitted X-ray image generated based on the X-ray transmission signal, or in other words, generated based on the sensing result from the line sensor 24.

### (2-1-2-4) Monitor

The monitor 26 is a liquid crystal display. The monitor 26 displays, *inter alia,* the transmitted X-ray image of the inspected object P and the inspection result of the inspected object P. The monitor 26 also has a touch panel function and receives input of operations performed by an operator, inspection parameters, etc.

### (2-1-2-5) Control apparatus

The control apparatus 28 is a computer that executes computations and processes related to X-ray inspection and controls the actions of the individual parts of the X-ray inspection apparatus 200. The control apparatus 28 is contained inside the shield box 21, but such an arrangement is not provided by way of limitation; the control apparatus 28 may be an apparatus installed independently of the shield box 21.

Although not shown in the drawings, the control apparatus 28 has a central processing unit (CPU) that performs computations and controls, a read only memory (ROM) that stores programs and information, a random access memory (RAM), a hard disk, etc. The control apparatus 28 is also provided with a display control circuit (not shown), a key input circuit, a communication port, etc. The display control circuit is a circuit that controls what is displayed on the monitor 26. The key input circuit is a circuit that imports key input data inputted by an operator through the touch panel of the monitor 26. The communication port is a port capable of communicating with an external device.

The control apparatus 28 is electrically connected to the conveyor motor 14, the encoder 16, and the extension/retraction drive unit 18 of the conveying unit 10. The control apparatus 28 is also electrically connected to the X-ray irradiator 22, the line sensor 24, and the monitor 26 of the X-ray inspection unit 20.

The control apparatus 28 is also connected so as to be capable of communicating with the robot control unit 40 (described hereinafter). The control apparatus 28 sends position information E, a reference signal S, velocity information V (described hereinafter), etc., to the robot control unit 40.

The control apparatus 28 has a storage unit 28i that stores, *inter alia,* parameters used in X-ray inspections, generated X-ray transmission images, and the inspection results of X-ray inspections. In addition, due to the CPU executing programs stored in the ROM, the hard disk, etc., the control apparatus 28 functions as a conveying unit control unit 28a, an image generation unit 28b, an inspection unit 28c, a counting unit 28d, a position information generation unit 28e, a position information sending unit 28f, a reference signal sending unit 28g, and a velocity information sending unit 28h.

### (a) Conveying unit control unit

The conveying unit control unit 28a controls the actions of the conveying unit 10.

For example, the conveying unit control unit 28a controls the conveying velocity of the conveying unit 10 by controlling the rotational speed of the conveyor motor 14 of the conveying unit 10. For example, in normal circumstances (when the first condition has not been satisfied) the conveying unit control unit 28a controls the conveying velocity of the conveying unit 10 to a first conveying velocity Z1 (m/sec). In other words, the conveying unit control unit 28a normally controls the rotational speed of the conveyor motor 14 such that the conveying unit 10 conveys the inspection objects P at the first conveying velocity Z1 (m/sec).

When the first condition has been satisfied, the conveying unit control unit 28a controls the conveying velocity of the conveying unit 10 (the velocity at which inspection objects P are conveyed) to a second conveying velocity Z2 (m/sec). In other words, when the first condition has been satisfied, the conveying unit control unit 28a controls the rotational speed of the conveyor motor 14 such that the conveying unit 10 conveys the inspection objects P at the second conveying velocity Z2 (m/sec). The second conveying velocity Z2 (m/sec) is a velocity slower than the first conveying velocity Z1 (m/sec). No limitation is provided on the second conveying velocity Z2 (m/sec); for example, the second conveying velocity Z2 (m/sec) is 1/2 of the first conveying velocity Z1 (m/sec).

Normally (when the second condition has not been satisfied), the state of the belt conveyor 12 is a first state in which the downstream end 12a is adjacent to the downstream conveying apparatus 70. However, when the second condition has been satisfied, the conveying unit control unit 28a controls the extension/retraction drive unit 18 of the conveying unit 10 to switch the state of the belt conveyor 12 to a second state in which the downstream end 12a is separated from the downstream conveying apparatus 70.

The first condition and the second condition shall be described together in the description of the actions of the X-ray inspection system 100 (described hereinafter).

### (b) Image generation unit

The image generation unit 28b generates a transmitted X-ray image based on the sensing result from the line sensor 24, or more specifically, based on the quantity of transmitted X-rays sensed by the line sensor 24 (the quantity of X-rays transmitted through an inspected object P).

Specifically, the image generation unit 28b acquires, at short time intervals (intervals of t (ms)), data (X-ray transmission signals) relating to the intensity of transmitted X-rays and being outputted from the X-ray-sensing elements 24a of the line sensor 24, and the image generation unit 28b connects a predetermined number of data sets to a time series in matrix form to generate a transmitted X-ray image. For example, the image generation unit 28b connects data, which is related to the intensity of transmitted X-rays and is outputted by the X-ray-sensing elements 24a of the line sensor 24 during the conveying unit 10 advances a predetermined distance L (see FIG. 5), to a time series in matrix form to generate a transmitted X-ray image of an inspected object P. The storage unit 28i stores the transmitted X-ray image generated by the image generation unit 28b.

The image generation unit 28b corrects the transmitted X-ray image in accordance with the conveying velocity of the conveying unit 10. This shall be described in detail.

When the conveying velocity of the conveying unit 10 is the first conveying velocity Z1 (m/sec), the X-ray transmission signals outputted from the X-ray-sensing elements 24a of the line sensor 24 are signals corresponding to the conveying distance of the conveying unit 10, which is first conveying velocity Z1 (m/sec) × t (ms). When the conveying velocity of the conveying unit 10 is the second conveying velocity Z2 (m/sec), the X-ray transmission signals outputted from the X-ray-sensing elements 24a of the line sensor 24 are signals corresponding to the conveying distance of the conveying unit 10, which is second conveying velocity Z2 (m/sec) × t (ms) (for example, in this embodiment, second conveying velocity Z2 (m/sec) = 0.5 × first conveying velocity Z1 (m/sec)). Accordingly, when data acquired within the same time (e.g., t (ms) × M (M being an integer)) is connected to generate a transmitted X-ray image of the inspected object P, the transmitted X-ray image for when the conveying velocity of the conveying unit 10 is the second conveying velocity Z2 (m/sec) is an image stretched in the conveying direction D2 of the conveying unit 10 with respect to the transmitted X-ray image for when the conveying velocity of the conveying unit 10 is the first conveying velocity Z1 (m/sec). Conversely, when data acquired within the same time (e.g., t (ms) × M (M being an integer)) is connected to generate a transmitted X-ray image of the inspected object P, the transmitted X-ray image for when the conveying velocity of the conveying unit 10 is the first conveying velocity Z1 (m/sec) is an image compressed in the conveying direction D2 of the conveying unit 10 with respect to the transmitted X-ray image for when the conveying velocity of the conveying unit 10 is the second conveying velocity Z2 (m/sec). Therefore, the image generation unit 28b corrects the transmitted X-ray image based on information about the conveying velocity of the conveying unit 10 sent by the encoder 16 so that the transmitted X-ray image is not stretched or compressed in the conveying direction of the conveying unit 10, even if the conveying velocity of the conveying unit 10 at the time of X-ray transmission signal acquisition changes.

### (c) Inspection unit

Based on the transmitted X-ray image of the inspection objects P generated by the image generation unit 28b, the inspection unit 28c inspects for poor quality in the inspection objects P corresponding to the transmitted X-ray image (the inspection objects P captured in the transmitted X-ray image).

For example, the inspection unit 28c determines foreign objects using a binarization sensing scheme. Specifically, when the transmitted X-ray image generated by the image generation unit 28b contains a pixel group (a collection of dense pixels) darker than a preset predetermined reference level relating to the brightness of a transmitted X-ray image, the inspection unit 28c determines that there is an image representing an inspected object P containing a foreign object in a position corresponding to the center of the pixel group. For example, when the transmitted X-ray image generated by the image generation unit 28b is an image such as that of FIG. 7 and pixel groups darker than the reference level are detected at the positions of the black circles denoted by the symbols A, B, and C, it is determined that there is an image representing inspection objects P containing foreign objects in the positions of the centers of the pixel groups A, B, and C in the transmitted X-ray image. The storage unit 28i stores the inspection result from the inspection unit 28c.

The abovementioned binarization sensing scheme is not provided by way of limitation as to the method for determining foreign objects; the inspection unit 28c may detect the presence of foreign objects using another known method (e.g., a trace sensing scheme).

In this embodiment, the inspection unit 28c determines that there is an image representing inspection objects P containing foreign objects in positions corresponding to pixel groups in the transmitted X-ray image indicating the presence of foreign objects, but such an aspect is not provided by way of limitation. For example, in addition to sensing foreign objects, the inspection unit 28c may specify the contours of inspection objects P containing foreign objects (surrounding foreign objects) in the transmitted X-ray image (in the example in FIG. 7, contours Oa, Ob, and Oc are specified), and may determine that there is an image representing inspection objects P containing foreign objects in the positions at the centers (in the example in FIG. 7, the centers Ga, Gb, and Gc) of the inspection objects P specified by the contours.

### (d) Counting unit

The counting unit 28d, based on the result of inspecting the transmitted X-ray image from the inspection unit 28c, counts the number of inspection objects P determined to be poor quality and present in a unit inspection region (one example of a first predetermined region, a region of distance L in the conveying direction D2 in the present embodiment) on the conveyor belt 13a of the conveying unit 10 captured in the transmitted X-ray image. Specifically, the counting unit 28d counts the number of pixel groups darker than the reference level as a result of the inspection of the inspection unit 28c, as the number of inspection objects P determined to be poor quality and present in the unit inspection region of the conveying unit 10.

The counting result of the counting unit 28d is used, for example, by the conveying unit control unit 28a to control the conveying velocity of the conveying unit 10 and the actions of the extension/retraction drive unit 18. The details shall be described hereinafter.

### (f) Position information generation unit

Based on the inspection result of the inspection unit 28c, the position information generation unit 28e generates position information E relating to positions on the conveying unit 10 (on the conveyor belt 13a) of inspection objects P determined to be poor quality. The storage unit 28i stores the position information E generated by the position information generation unit 28e.

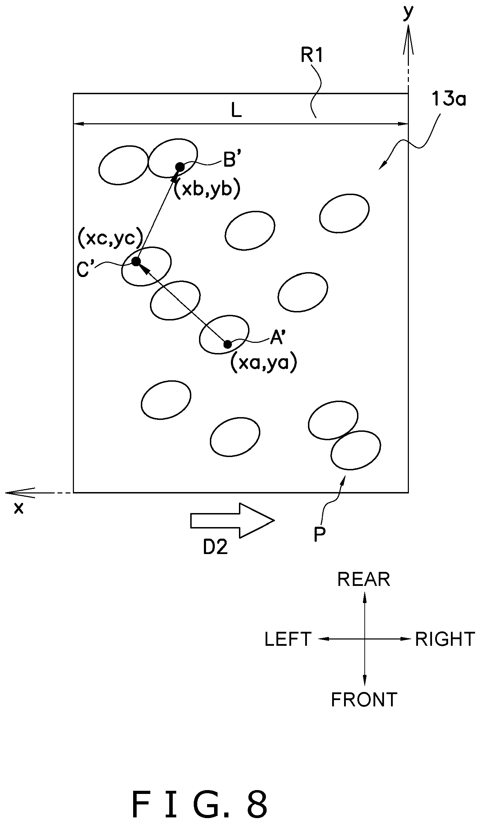

Specifically, the position information generation unit 28e reads the positions of foreign objects in the transmitted X-ray image as coordinates on the conveyor belt 13a. A specific example of the process executed by the position information generation unit 28e shall be described with reference to FIGS. 7 and 8.

For example, the transmitted X-ray image of FIG. 7 is considered to be a transmitted X-ray image of a region R1 (see FIG. 8) on the conveyor belt 13a. The region R1 is the conveying surface of the conveyor belt 13a passing underneath the irradiation range Ir of X-rays from the X-ray irradiator 22 within a certain time. In this embodiment, the region R1 is a region of the conveyor belt 13a in which the length is a distance L in the conveying direction D2 of the conveying unit 10.

In the transmitted X-ray image, an XY coordinate system is set in which the origin is the lower right corner of a transmitted X-ray image such as is shown in FIG. 7. In the region R1 on the belt conveyor 12, an xy coordinate system is set in which the origin is the right front end of the region R1 on the belt conveyor 12 such as is shown in FIG. 8. The positive direction of the x-axis corresponds to the opposite of the conveying direction D2 of the inspection objects P, and the positive direction of the y-axis corresponds to rearward. The X-axis and Y-axis of the coordinate system shown in FIG.7 correspond respectively to the x-axis and y-axis of the coordinate system shown in FIG. 8. The origins and coordinate systems may be set as desired, and the origins and coordinate systems may be set in other aspects in the transmitted X-ray image and the region R1.

In the example in FIG. 7, the inspection unit 28c determines the position (Xa, Ya) of the center of pixel group A in the XY coordinate system, the position (Xb, Yb) of the center of pixel group B, and the position (Xc, Yc) of the center of pixel group C to be positions where there is an image representing an inspected object P containing a foreign object. The position information generation unit 28e specifies coordinates (xa, ya), (xb, yb), and (xc, yc) of the xy coordinate system that correspond to coordinates (Xa, Ya), (Xb, Yb), and (Xc, Yc) of the XY coordinate system. The position information generation unit 28e designates information for these coordinates (xa, ya), (xb, yb), and (xc, yc) as position information E relating to positions on the conveying unit 10 of inspection objects P determined by the inspection unit 28c to be poor quality in the region R1 on the conveyor belt 13a. In other words, for the region R1 on the conveyor belt 13a, the position information generation unit 28e generates position information E including information for the coordinates (xa, ya), (xb, yb), and (xc, yc) of positions on the conveying unit 10 of the inspection objects P determined by the inspection unit 28c to be poor quality.

For example, when the inspection unit 28c has specified contours of inspection objects P containing foreign objects (in the example in FIG. 7, specified contours Oa, Ob, and Oc) and determined the positions of the centers (in the example in FIG. 7, the positions of centers Ga, Gb, and Gc) of the inspection objects P specified by the contours to be the positions where inspection objects P are present, the position information generation unit 28e may specify the coordinates of the xy coordinate system that correspond to the coordinates of the centers Ga, Gb, and Gc in the XY coordinate system, and may designate information for these coordinates as position information E relating to positions on the conveying unit 10 of the inspection objects P determined by the inspection unit 28c to be poor quality in the region R1 on the conveyor belt 13a.

### (e) Position information sending unit

The position information sending unit 28f sends the position information E generated by the position information generation unit 28e (position information E stored in the storage unit 28i) to the robot control unit 40.

### (g) Reference signal sending unit

The reference signal sending unit 28g sends a fixed-interval reference signal S issued every time the conveying unit 10 advances a first distance. Specifically, the reference signal sending unit 28g issues a reference signal S to the robot control unit 40 every time the conveying unit 10 advances a distance 2L (every time the movement distance of inspection objects P conveyed by the conveying unit 10 reaches 2L) based on information relating to the advancing distance of the conveying unit 10 outputted by the encoder 16. The reference signal S is issued by the reference signal sending unit 28g independently of the process of X-ray inspection.

The reference signal sending unit 28g, based on data acquired from the encoder 16 by the control apparatus 28, switches the reference signal S between on and off every time the conveying unit 10 advances a distance L (e.g., the distance of a J row of one imaging width u of the line sensor 24 when the conveying velocity of the conveying unit 10 is the first conveying velocity Z1 (m/sec)). Specifically, when the conveying unit 10 begins driving and moves the conveyor belt 13a a distance L, from that time point until the conveying unit 10 further moves the conveyor belt 13a by a distance L, the reference signal sending unit 28g issues a reference signal S. While the conveying unit 10 thereafter further moves the conveyor belt 13a a distance L, the issuing of the reference signal S is stopped and kept in standby, and when the conveying unit 10 finishes moving the conveyor belt 13a a distance L, the issuing of the reference signal S is restarted. The reference signal sending unit 28g performs this action repeatedly. That is, the reference signal S is a signal issued while the conveying unit 10 conveys the conveyor belt 13a a distance L every time the conveying unit 10 conveys the conveyor belt 13a a distance (distance 2L) twice the distance L. In other words, the reference signal S is a signal switched between on and off every time the conveying distance of the conveying unit 10 is the distance L.

### (h) Velocity information sending unit

The velocity information sending unit 28h issues information (velocity information V) about the conveying velocity of the conveying unit 10 at the given moment to the robot control unit 40 based on information relating to the conveying velocity of the conveying unit 10 outputted by the encoder 16. The velocity information V need not be merely the conveying velocity of the conveying unit 10, but may be certain information about a correlation with the conveying velocity of the conveying unit 10. For example, the velocity information V may be a conveying velocity level correlated with the conveying velocity of the conveying unit 10, or information related the conveying status of the conveying unit 10, which correlates with the conveying velocity of the conveying unit 10, such as the rotational speed of the conveyor motor 14 that drives the conveying unit 10.

In this embodiment, the velocity information sending unit 28h of the control apparatus 28 sends velocity information V based on information relating to the conveying velocity of the conveying unit 10 outputted by the encoder 16, but this example is not provided by way of limitation. For example, the encoder 16, rather than the velocity information sending unit 28h, may directly send information relating to the conveying status of the conveying unit 10 at the given moment as velocity information V to the robot control unit 40.

### (2-2) Robot

The robot 30 is mainly provided with an arm 32, an arm drive unit 33, and a suction unit 34.

The suction unit 34 is mainly provided with a suction ejector 34a serving as one example of a removal mechanism, a hose 34b, and a suction drive unit 34c. The suction drive unit 34c causes the suction ejector 34a to generate negative pressure by supplying compressed air to the suction ejector 34a. The suction drive unit 34c is, for example, an electromagnetic valve provided to a tube that supplies compressed air to the suction ejector 34a. The suction ejector 34a utilizes this negative pressure to remove inspection objects P conveyed by the conveying unit 10 by suctioning the inspection objects P through a suction port (not shown) disposed on the lower side of the suction ejector 34a (the side facing the conveyor belt 13a). The size of the suction port of the suction ejector 34a is designed wide enough, within an acceptable range (while avoiding situations in which a large number of inspection objects P are sucked in all at once), such that even inspection objects P of an assumed maximum size can be sucked in through the suction port. Inspection objects P and air sucked in through the suction port of the suction ejector 34a and compressed air supplied by the suction drive unit 34c flow into the hose 34b. The inspection objects P flowing into the hose 34b are recovered in a recovery receptacle (not shown).

The suction ejector 34a is attached to a distal end of the arm 32 of the robot 30. The arm 32 of the robot 30 of the present embodiment is a serial link robot having a plurality of links that are linked by joints, the links being connected in series. Though not provided as an example by way of limitation, the robot 30 of the present embodiment is a serial link robot having a 4-axial degree of freedom in activating the arm 32 in the horizontal direction, the drive source being a motor that serves as the arm drive unit 33. The robot 30 can move the suction ejector 34a, which serves as one example of a removal mechanism, in a direction (left-right in the present embodiment) parallel to the conveying direction D2 of the conveying unit 10 and in the first direction D1 (forward-backward in the present embodiment) orthogonal to the conveying direction D2 by activating the arm 32. The robot 30 uses the suction ejector 34a to take inspection objects P determined to be poor-quality products away from the conveying unit 10, by bringing the suction ejector 34a near to the inspection objects P determined by the inspection unit 28c to be poor quality (more specifically, by bringing the suction port of the suction ejector 34a near to the inspection objects P determined to be poor-quality products).

A serial link robot is not provided as an example by way of limitation as to the robot 30. For example, the robot 30 may be a parallel link robot, and the suction ejector 34a may be attached to a distal end of a parallel link. In addition, units that perform single-axis action (units capable of moving the suction ejector 34a in only one direction) may be combined and the robot 30 may be configured such that the suction ejector 34a can be moved in a direction parallel to the conveying direction D2 of the conveying unit 10 and in the first direction D1 orthogonal to the conveying direction D2.

The robot 30 moves the suction ejector 34a within a predetermined movement region in a plan view. The movement region of the suction ejector 34a is separated from the position irradiated by X-rays from the X-ray irradiator 22 by the aforementioned distance L × K (K being an integer, e.g., 5) in the conveying direction D2 of the conveying unit 10. As shall be described hereinafter, the action of the robot 30 is controlled such that a command generated based on the position information E generated on the basis of the transmitted X-ray image capturing the conveyor belt 13a over a distance L is started at a timing decided based on the reference signal S switched between on and off every time the conveying unit 10 advances a distance L. Specifically, the action of the robot 30 is controlled so that a command generated based on the position information E generated on the basis of the transmitted X-ray image capturing the conveyor belt 13a over a distance L in the conveying direction D2 of the conveying unit 10 is started at a timing of the falling or rising of the reference signal S. Therefore, the robot 30 can take away inspection objects P containing foreign objects without delay and with high precision by starting a command based on the position information E generated based on a certain transmitted X-ray image at the timing of the falling or rising of the reference signal S after (K-1) times after the final set of data (X-ray transmission signals) for generating the transmitted X-ray image has been acquired. In short, in this embodiment, the robot 30 can take away inspection objects P containing foreign objects without delay and with high precision because the robot 30 starts the process of removing inspection objects P containing foreign objects from the moment when, in a plan view, the region on the conveyor belt 13a corresponding to a certain transmitted X-ray image reaches a predetermined movement region of the suction ejector 34a.

Theoretically, the movement region of the suction ejector 34a may be disposed at a distance L × K apart from the position irradiated by X-rays from the X-ray irradiator 22, but in reality, there is a time lag between when the robot 30 receives a command and when the robot actually activates. Therefore, in consideration of the time lag, it is preferable that the movement region of the suction ejector 34a is disposed at a distance L × M + *α* (distance considering the time lag) apart from the position irradiated by X-rays from the X-ray irradiator 22. In order to avoid complicated description below, the description shall be made assuming an ideal state in which there is no time lag between the time when the robot 30 receives the command and the time when the robot 30 actually activates.

### (2-3) robot control unit

The robot control unit 40 is, e.g., a computer that controls the actions of the robot 30. The functions of the robot control unit 40 are not limited to being realized by software; the functions may be realized by hardware and may be realized by both hardware and software working together.

In FIG. 2, the robot control unit 40 is drawn at a position independent of both the X-ray inspection apparatus 200 and the robot 30, but this example is not provided by way of limitation. For example, the control apparatus 28 of the X-ray inspection apparatus 200 may function as the robot control unit 40. Moreover, for example, the robot control unit 40 may be installed in the robot 30. Moreover, the robot control unit 40 may be an apparatus independent of both the X-ray inspection apparatus 200 and the robot 30. Moreover, some of the functions of the robot control unit 40 may be realized by the control apparatus 28 of the X-ray inspection apparatus 200, and other functions of the robot control unit 40 may be realized by a computer installed in the robot 30. In the present embodiment, the following description is given assuming that the robot control unit 40 is an apparatus independent of both the X-ray inspection apparatus 200 and the robot 30.

The robot control unit 40 has (not shown), a central processing unit (CPU) that performs computations and controls, a read only memory (ROM) that stores programs and information, a random access memory (RAM), a hard disk, etc. The robot control unit 40 is also provided with a communication port (not shown), etc. The communication port is a port that enables communication with a device outside of the robot control unit 40.

The robot control unit 40 is electrically connected to the arm drive unit 33 and the suction drive unit 34c of the robot 30. In addition, the robot control unit 40 is connected so as to be capable of communicating with the control apparatus 28. The robot control unit 40 receives, for example, position information E, reference signals S, and velocity information V from the control apparatus 28.

Due to the CPU executing programs stored in the ROM, the hard disk, etc., the robot control unit 40 functions as a command generation unit 42, a command revision unit 44, and a command sending unit 46. A command storage unit 48 stores commands generated by the command generation unit 42. The individual functional units shall be described.

### (a) Command generation unit

The command generation unit 42 generates a command for controlling the action of the robot 30 based on the position information E sent by the position information sending unit 28f of the control apparatus 28.

Specifically, the command generation unit 42 decides how to move the suction ejector 34a when the region of the conveyor belt 13a corresponding to the position information E has moved into the movement region of the suction ejector 34a. The command generation unit 42 decides how to move the suction ejector 34a so that in a plan view, the suction port (not shown) of the suction ejector 34a will overlap the coordinates specified by the position information E in the region of the conveyor belt 13a corresponding to the position information E. The command generation unit 42 then generates a command for the arm drive unit 33 in order to move the suction ejector 34a as decided.

Preferably, the command generation unit 42 controls the action of the robot 30 (specifically, the action of the arm drive unit 33) so as to minimize the movement distance of the suction ejector 34a taking away the inspection objects P determined to be poor quality from the region of the conveyor belt 13a (unit inspection region) corresponding to the position information E.

For example, specifically, the command generation unit 42 decides the movement route of the suction ejector 34a in the following manner. As a premise, three or more inspection objects P determined to be poor quality are present in the unit inspection region of the conveyor belt 13a corresponding to the position information E (in the region where the length in the conveying direction D2 is the distance L). For example, in the region of the conveyor belt 13a corresponding to the position information E, it is assumed that the position information E specifies that inspection objects P determined to be poor quality are present in the positions (xa, ya), (xb, yb), and (xc, yc) shown in FIG. 8. In this case, the command generation unit 42 decides, for example, to move the suction port (not shown) of the suction ejector 34a to (xa, ya), which is the farthest downstream in the conveying direction D2. Next, the command generation unit 42 decides, for example, to move the suction port (not shown) of the suction ejector 34a to (xc, yc) and (xb, yb) in sequence, so as to minimize the movement distance of the suction ejector 34a.

The method described above is not provided by way of limitation as to the manner in which the movement route of the suction ejector 34a is decided by the command generation unit 42. For example, the command generation unit 42 may decide the movement route of the suction ejector 34a so that the suction port (not shown) of the suction ejector 34a moves from the downstream-side coordinates to the upstream-side coordinates in the conveying direction D2 (for example, in the example in FIG. 8, so that the suction port (not shown) of the suction ejector 34a moves to (xa, ya), (xb, yb), and (xc, yc) in sequence).

The command generation unit 42 decides the action timing for the suction drive unit 34c (the timing for the blowing in of compressed air) so that the suction ejector 34a performs suction at least at the timing at which the suction port (not shown) of the suction ejector 34a overlaps the coordinates specified by the position information E in the region of the conveyor belt 13a corresponding to the position information E. The command generation unit 42 then generates a command for the suction drive unit 34c for driving the suction drive unit 34c at the decided action timing.

The command generation unit 42 generates commands for the arm drive unit 33 and the suction drive unit 34c based on the premise that the conveying velocity of the conveying unit 10 is the first conveying velocity Z1 (m/sec).

### (b) Command revision unit

The command revision unit 44, based on the velocity information V, revises the details of the commands generated by the command generation unit 42 and stored in the command storage unit 48.

Specifically, the command generation unit 42 generates commands for the arm drive unit 33 and the suction unit 34 based on the premise that the conveying velocity of the conveying unit 10 is the first conveying velocity Z1 (m/sec) as previously described. However, there are cases in which the conveying unit control unit 28a changes the conveying velocity of the conveying unit 10 to the second conveying velocity Z2 (m/sec) when a first condition (described hereinafter) is satisfied. In addition, when the conveying velocity of the conveying unit 10 is changed from the first conveying velocity Z1 (m/sec) to the second conveying velocity Z2 (m/sec), or from the second conveying velocity Z2 (m/sec) to the first conveying velocity Z1 (m/sec), the conveying velocity of the conveying unit 10 will temporarily be a velocity between the first conveying velocity Z1 (m/sec) and the second conveying velocity Z2 (m/sec). In such cases, when the arm drive unit 33 is activated by a command generated based on the premise that the conveying velocity of the conveying unit 10 is the first conveying velocity Z1 (m/sec), there is a possibility that inspection objects P containing foreign objects cannot be properly removed. In view of this, the command revision unit 44 revises the details of the command stored in the command storage unit 48 so as to match the velocity information V of the conveying unit 10.

### (c) Command sending unit

The command sending unit 46 is a functional unit that sends commands to the robot 30. At a timing decided based on the reference signal S, the command sending unit 46 starts the control of the robot 30 according to the details of a command generated by the command generation unit 42 and stored in the command storage unit 48.

For example, as previously described, when the movement region of the suction ejector 34a is separated from the position irradiated by X-rays from the X-ray irradiator 22 by a distance L × K in the conveying direction D2, the command sending unit 46 starts a command based on the position information E generated based on a certain transmitted X-ray image at the timing of the falling or rising of the reference signal S after (K-1) times after the final set of data (X-ray transmission signals) for generating the transmitted X-ray image has been acquired (in other words, after the detection of the rising or falling of the reference signal S at the time of the acquisition of the final set of data for generating the transmitted X-ray image).

When the conveying velocity of the conveying unit 10 has been changed from the first conveying velocity Z1 at the point in time when the command is sent, the command sending unit 46 does not send the command stored in the command storage unit 48 to the arm drive unit 33 and the suction drive unit 34c of the robot 30 without revision, but sends a command revised by the command revision unit 44 to the robot 30.

### (3) Actions of X-ray inspection system

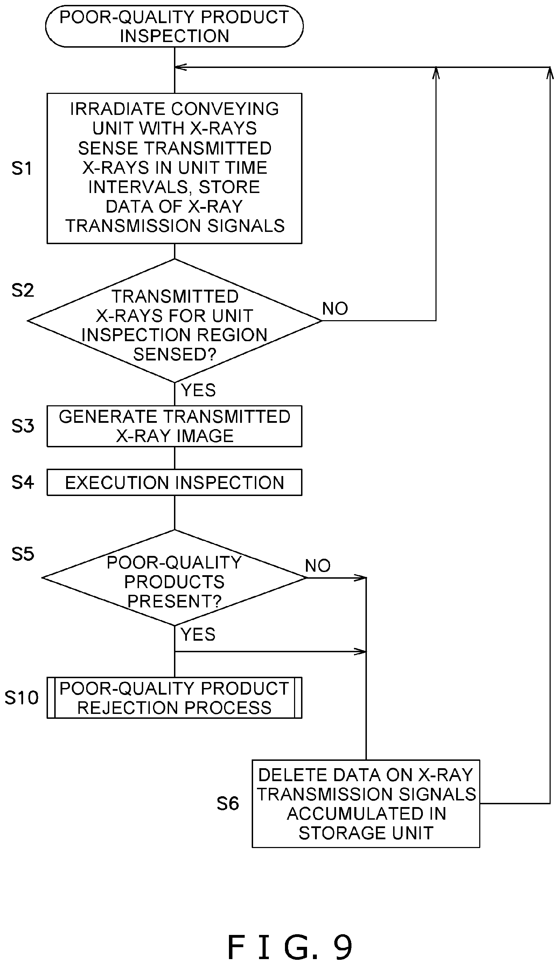

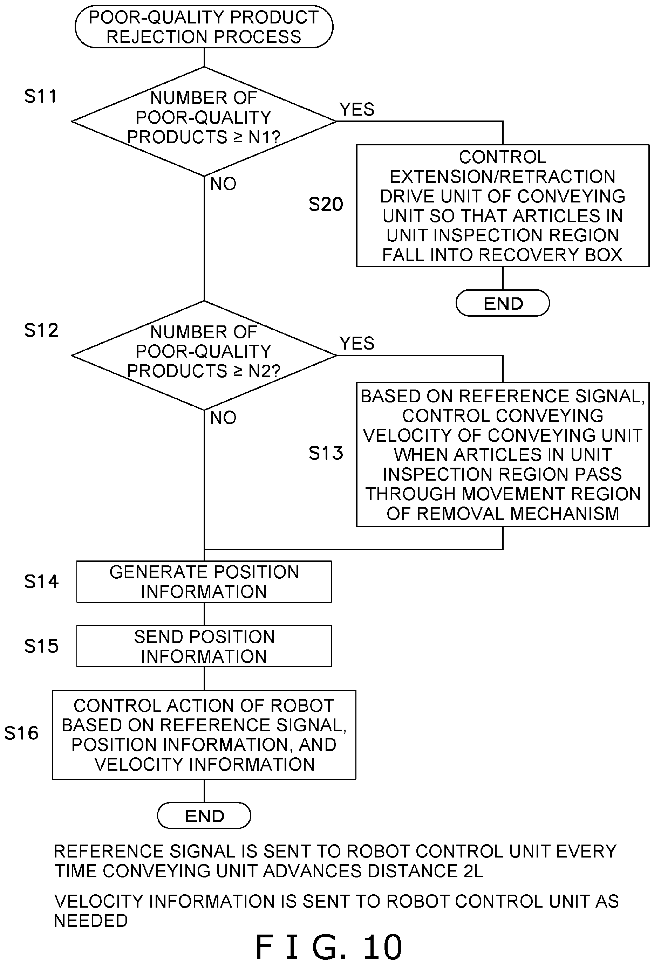

The process of the poor-quality product inspection (a foreign object inspection in this embodiment) executed by the X-ray inspection system 100 shall next be described with reference to the flowcharts of FIGS. 9 and 10. The poor-quality product inspection in this embodiment includes not only an X-ray inspection step, but also a step for rejecting inspection objects P assessed to be poor quality from the conveying unit 10 after the X-ray inspection. FIG. 9 is a flowchart of a poor-quality product inspection executed by the X-ray inspection system 100. FIG. 10 is a flowchart of a poor-quality product rejection process during the poor-quality product inspection.

The flowcharts of FIGS. 9 and 10 are merely one example of the poor-quality product inspection process and may be changed as appropriate. For example, the order in which the process is executed may be changed within a consistent range. In addition, a plurality of processes may be executed simultaneously within a consistent range.

As a premise, though not mentioned in the flowcharts of FIGS. 9 and 10, the robot control unit 40 receives the reference signal S sent by the reference signal sending unit 28g and the velocity information V sent by the velocity information sending unit 28h independently of the X-ray inspection.

When the X-ray inspection system 100 is driven, the X-ray irradiator 22 irradiates the conveying unit 10 (the conveyor belt 13a of the conveying unit 10), which continuously conveys a large number of inspection objects P at random positions, with X-rays. In other words, the X-ray irradiator 22 irradiates the inspection objects P carried on the conveyor belt 13a with X-rays. The X-ray-sensing elements 24a of the line sensor 24 sense X-rays transmitted through the inspection objects P. The X-ray-sensing elements 24a send data (X-ray transmission signals) obtained at a predetermined unit time (t (ms)) and related to the intensity of the transmitted X-rays to the control apparatus 28. The storage unit 28i of the control apparatus 28 stores the received data related to the intensity of the transmitted X-rays (step S1).

When data related to the intensity of the transmitted X-rays for a distance L in the conveying direction D2 (for a unit inspection region) is collected (Yes in step S2), the image generation unit 28b generates a transmitted X-ray image using the data related to the intensity of the transmitted X-rays for the unit inspection region stored in the storage unit 28i (step S3).

Next, in step S4, the inspection unit 28c inspects for poor quality in the inspection objects P (in this embodiment, contamination of the inspection objects P with foreign objects) based on the transmitted X-ray image.

In step S5, the counting unit 28d determines if inspection objects P determined to be poor quality are present in the unit inspection region (determines if pixel groups determined to be foreign objects are present in the transmitted X-ray image), and when inspection objects P determined to be poor quality are present in the unit inspection region (Yes in step S5), the process advances to step S10 and the process of step S6 is simultaneously executed. In step S10, the process of rejecting inspection objects P determined to be poor quality from the conveying unit 10 is performed. The process of rejecting inspection objects P from the conveying unit 10 shall be described hereinafter.

The process of step S10 and the process of step S6 are executed in parallel because the X-ray inspection unit 20 and the location where the process of removing inspection objects P from the conveying unit 10 is performed are separated by a predetermined distance, and there is therefore a lag between the timing at which the X-ray inspection is executed and the timing of the process of rejecting inspection objects P determined to be poor quality in the X-ray inspection from the conveying unit 10.

When the counting unit 28d has determined that inspection objects P determined to be poor quality are not present in the unit inspection region (No in step S5), the process of step S10 is not executed and the process advances to step S6.

In step S6, the data on the X-ray transmission signals in the storage unit 28i used to generate the transmitted X-ray image in step S3 is deleted. After the execution of step S6, the process returns to step S1.

### <Poor-quality product rejection process>

The following is a description of the process executed when the process has advanced to step S10 in the flowchart of FIG. 9.

When the process has advanced to step S10, the counting unit 28d, based on the result of the inspection performed by the inspection unit 28c, counts the number of inspection objects P determined to be poor quality and present in the unit inspection region of the conveying unit 10 (the region on the conveyor belt 13a of the conveying unit 10 that has a length of a distance L in the conveying direction D2 and that corresponds to the transmitted X-ray image generated in step S3).

When the counted number of inspection objects P is equal to or greater than a first threshold value N1 (e.g., 10) (Yes in step S11), the conveying unit control unit 28a controls the extension/retraction drive unit 18 of the conveying unit so that the inspection objects P in the unit inspection region all fall into the recovery box 50 (step S20). In other words, the conveying unit control unit 28a assesses that the previously described second condition has been satisfied when the number of inspection objects P determined to be poor quality and present in the unit inspection region of the conveying unit 10 (the region on the conveyor belt 13a of the conveying unit 10 that has a length of a distance L in the conveying direction D2 and that corresponds to the transmitted X-ray image generated in step S3) is equal to or greater than the first threshold value N1 and the timing has come that the unit inspection region of the conveying unit 10 passes above the recovery box 50. The conveying unit control unit 28a then controls the extension/retraction drive unit 18 to switch the state of the belt conveyor 12 from the first state to the second state in which the downstream end 12a is separated from the downstream conveying apparatus 70 so that the inspection objects P in the unit inspection region of the conveying unit 10 all fall into the recovery box 50.

After the inspection objects P in the unit inspection region of the conveying unit 10 have all fallen into the recovery box 50, the conveying unit control unit 28a controls the extension/retraction drive unit 18 to switch the state of the belt conveyor 12 from the second state to the first state in which the downstream end 12a is adjacent to the downstream conveying apparatus 70. The execution of this control ends the poor-quality product rejection process for cases in which the number of inspection objects P determined to be poor quality is equal to or greater than the first threshold value N1 (e.g., 10).

Such a process is performed because when the number of inspection objects P determined to be poor quality and present in the unit inspection region of the conveying unit 10 (a region having a length of a distance L in the conveying direction D2) is equal to or greater than the first threshold value N1, it is difficult in terms of the capability of the robot 30 for all of these inspection objects P to be removed by the robot 30 while the inspection objects P are being conveyed by the conveying unit 10. The first threshold value N1 may be decided as appropriate.

When the number of inspection objects P counted by the counting unit 28d is less than the first threshold value N1 and equal to or greater than a second threshold value N2 (e.g., 5) less than the first threshold value N1 (No in step S11 and Yes in step S12), the conveying unit control unit 28a controls the action of the conveyor motor 14 so that the conveying velocity of the conveying unit 10 when the inspection objects P in the unit inspection region (the region on the conveyor belt 13a of the conveying unit 10 that has a length of a distance L in the conveying direction D2 and that corresponds to the transmitted X-ray image generated in step S3) pass through the movement region of the suction ejector 34a (in other words, the region where inspection objects P are rejected by the robot 30) reaches the second conveying velocity Z2 (m/sec), which is slower than the first conveying velocity Z1 (m/sec). The conveying unit control unit 28a may decide the timing of the control of the rotational speed of the conveyor motor 14 based on the reference signal S sent by the reference signal sending unit 28g and the information about the movement distance of the conveying unit 10 sent by the encoder 16. In this embodiment, in other words, the conveying unit control unit 28a assesses that the previously described first condition has been satisfied when the number of inspection objects P determined to be poor quality and present in the unit inspection region of the conveying unit 10 (the region on the conveyor belt 13a of the conveying unit 10 that has a length of a distance L in the conveying direction D2 and that corresponds to the transmitted X-ray image generated in step S3) is equal to or greater than the second threshold value N2 and less than the first threshold value N1 and the timing when the unit inspection region of the conveying unit 10 passes through the movement region of the suction ejector 34a has come. The conveying unit control unit 28a then controls the rotational speed of the conveyor motor 14 so that the conveying velocity of the conveying unit 10 reaches the second conveying velocity Z2 (m/sec). The conveying unit control unit 28a returns the conveying velocity of the conveying unit 10 to the first conveying velocity Z1 (m/sec) when this unit inspection region, in which the number of inspection objects P counted by the counting unit 28d is equal to or greater than the second threshold value N2 and less than the first threshold value N1, has passed through the movement region of the suction ejector 34a.

Such a process is performed because when the number of inspection objects P determined to be poor quality and present in the unit inspection region of the conveying unit 10 (a region having a length of a distance L in the conveying direction D2) is equal to or greater than the second threshold value N2, it is difficult in terms of the capability of the robot 30 for all of these inspection objects P to be removed by the robot 30 while the inspection objects P are being conveyed by the conveying unit 10 at the first conveying velocity Z1 (m/sec). The second threshold value N2 may be decided as appropriate.

Upon having advanced to step S13, the process then advances to step S14.

When the number of inspection objects P counted by the counting unit 28d is less than the second threshold value N2 (No in step S11 and No in step S12), the process advances to step S14.

In step S14, the position information generation unit 28e generates position information E as described above.

Next, in step S15, the position information sending unit 28f sends the position information E generated by the position information generation unit 28e to the robot control unit 40.

In step S16, the robot control unit 40 controls the action of the robot 30 based on the position information E sent in step S14, and the reference signal S and velocity information V sent independently of the X-ray inspection. How the robot control unit 40 controls the action of the robot 30 using the command generation unit 42, the command revision unit 44, the command sending unit 46, and the command storage unit 48 has already been described and shall therefore not be described here.

### (4) Characteristics

(4-1) The X-ray inspection system 100 of the present embodiment includes a conveying unit 10, an X-ray irradiator 22 serving as one example of an X-ray irradiation unit, a line sensor 24 serving as one example of a transmitted X-ray sensing unit, an image generation unit 28b, an inspection unit 28c, a position information generation unit 28e, a robot 30, and a robot control unit 40 serving as one example of a first control unit. The conveying unit 10 continuously conveys a large number of inspection objects P at random positions. The X-ray irradiator 22 irradiates the inspection objects P on the conveying unit 10 with X-rays. The line sensor 24 senses X-rays transmitted through the inspection objects P. The image generation unit 28b generates a transmitted X-ray image based on a sensing result from the line sensor 24. The inspection unit 28c inspects for poor quality in the inspection objects P based on the transmitted X-ray image. The position information generation unit 28e, based on an inspection result from the inspection unit 28c, generates position information E relating to positions of the inspected object P determined to be poor quality on the conveying unit 10. The robot 30 has a suction ejector 34a serving as a removal mechanism for removing the inspected object P. The robot 30 can move the suction ejector 34a in at least a first direction D1 orthogonal to a conveying direction D2 of the conveying unit 10. By using the suction ejector 34a, the robot 30 takes the inspected object P determined by the inspection unit 28c to be poor quality away from the conveying unit 10. The robot control unit 40, based on at least the position information E and a fixed-interval reference signal S issued every time the conveying unit 10 advances a distance 2L, controls the action of the robot 30 so that the suction ejector 34a comes near to and takes away the inspected object P determined by the inspection unit 28c to be poor quality.

In the X-ray inspection system 100 of the present embodiment, the amount of good-quality products taken away along with poor-quality products can be reduced because the action of the robot 30 is controlled to take poor-quality products away from the conveying unit 10 based on position information relating to positions of poor-quality products on the conveying unit 10.

The step in which poor quality in the inspection objects P is inspected and position information E is generated based on the transmitted X-ray image requires a certain amount of computation and processing time, and the computation and processing time is not the same every time. Therefore, when the robot 30 is controlled according to the timing at which the position information E is generated, there is a risk of misalignment between a position where the robot 30 moves to take an inspected object P and a position where a poor-quality product is actually present.

As a countermeasure to this, in the X-ray inspection system 100 of the present embodiment, the robot control unit 40 controls the robot 30 based on the fixed-interval reference signal S issued every time the conveying unit 10 advances a distance 2L. Therefore, even if there is variation in the computation and processing time required for poor quality in the inspection objects P to be inspected and position information E to be generated based on the transmitted X-ray image, it is possible to suppress misalignment between a position where the robot 30 moves to take an inspected object P and a position where a poor-quality product is actually present.

(4-2) In the X-ray inspection system 100 of the present embodiment, the robot 30 can also move the suction ejector 34a in a direction parallel to the conveying direction D2 of the conveying unit 10.

In the X-ray inspection system 100 according to the present embodiment, the suction ejector 34a can move not only in the first direction D1 orthogonal to the conveying direction D2, but also in a direction parallel to the conveying direction D2. Therefore, a plurality of poor-quality products can be removed from the conveying unit 10 without stopping the conveying performed by the conveying unit 10 even when a plurality of poor-quality products are present on the conveying unit 10 in substantially the same position in the conveying direction D2 and in different positions in the first direction D1.

(4-3) The X-ray inspection system 100 of the present embodiment includes a counting unit 28d. Based on the result of the inspection of the inspection unit 28c, the counting unit 28d counts the number of inspection objects P determined to be poor quality and present in a first predetermined region of the conveying unit 10 (a region on the conveyor belt 13a of a distance L in the conveying direction D2, this region corresponding to one transmitted X-ray image).

In the X-ray inspection system 100 of the present embodiment, because the number of inspection objects P determined to be poor quality and present in the first predetermined region of the conveying unit 10 are counted, it is possible to assess that, *inter alia,* the robot 30 can take away all of the poor-quality products at, for example, the conveying velocity of the conveying unit 10 at the given moment.

(4-4) The X-ray inspection system 100 of the present embodiment includes a conveying unit control unit 28a serving as one example of a velocity control unit. The conveying unit control unit 28a changes a conveying velocity of the conveying unit 10. The conveying unit control unit 28a controls the conveying velocity based on a counting result from the counting unit 28d.

In the X-ray inspection system 100 of the present embodiment, the conveying velocity of the conveying unit 10 is changed based on the number of poor-quality products present in a first predetermined region of the conveying unit 10, and the conveying velocity can therefore be reduced when, for example, the number of poor-quality products present in the first predetermined region is large and cannot be processed by the robot 30 at the conveying velocity of the given moment. In addition, the conveying velocity can be increased when the number of poor-quality products present in the predetermined region is low and there is leeway in the processing capability of the robot 30. Therefore, the conveying velocity can be increased and the processing capability of the X-ray inspection system 100 can be improved when the number of poor-quality products present in the predetermined region is low, while realizing a highly reliable X-ray inspection system 100 that does not fail to remove any poor-quality products.

(4-5) In the X-ray inspection system 100 of the present embodiment, the image generation unit 28b corrects the transmitted X-ray image in accordance with the conveying velocity of the conveying unit 10.

In the X-ray inspection system 100 of the present embodiment, the robot control unit 40 can activate the robot 30 at a proper timing irrespective of the conveying velocity of the conveying unit 10, and poor-quality products can be taken away from the conveying unit 10 with precision.

(4-6) The X-ray inspection system 100 of the present embodiment includes an extension/retraction drive unit 18 serving as an article removal apparatus, and a conveying unit control unit 28a serving as one example of a second control unit. The extension/retraction drive unit 18 collectively takes away the inspection objects P present on the conveying unit 10 in a second predetermined region in the conveying direction D2 (the inspection objects P present in a region where inspection objects P containing therein reach the downstream end 12a of the belt conveyor 12 in a case where the state of the belt conveyor 12 were set to the second state). The conveying unit control unit 28a controls the action of the extension/retraction drive unit 18. The conveying unit control unit 28a activates the extension/retraction drive unit 18 in a case where the number of inspection objects P determined to be poor quality and present in the first predetermined region, counted by the counting unit 28d, exceeds a first threshold value N1.

In the X-ray inspection system 100 of the present embodiment, poor-quality products can be collectively removed by the extension/retraction drive unit 18 when the number of poor-quality products present in a predetermined region of the conveying unit 10 is comparatively large and cannot be processed by the robot 30. Therefore, a highly reliable X-ray inspection system 100 that does not fail to remove any poor-quality products can be realized without temporarily stopping the X-ray inspection system 100 (without taking the time required to stop/restart operation of the X-ray inspection system 100).

(4-7) In the X-ray inspection system 100 of the present embodiment, the robot control unit 40 controls the action of the robot 30 such that a movement distance of the suction ejector 34a that takes away the inspection objects P determined to be poor quality reaches a minimum in a case where three or more inspection objects P determined to be poor quality are present in a predetermined region (a unit inspection region having a length of a distance L in the conveying direction D2) of the conveying unit 10.

In the X-ray inspection system 100 of the present embodiment, because the suction ejector 34a is controlled so as to move a minimum distance, a greater number of poor-quality products can be taken away from the conveying unit 10 in the same processing time in comparison to cases in which the movement distance of the suction ejector 34a is not taken into consideration.

(4-8) In the X-ray inspection system 100 of the present embodiment, at the same point in time, the conveying velocity of the conveying unit 10 in the region irradiated with X-rays by the X-ray irradiator 22 and the conveying velocity of the conveying unit 10 in the region where the robot 30 (movement region of the suction ejector 34a) takes away the inspected object P are the same.

(4-9) In the X-ray inspection system 100 of the present embodiment, the suction ejector 34a uses suction to remove the inspection objects P determined to be poor quality.

In the X-ray inspection system 100 of the present embodiment, inspection objects P determined to be poor quality can be quickly removed from the conveying unit 10.

(4-10) An X-ray inspection apparatus 200 of the present embodiment includes a conveying unit 10, an X-ray irradiator 22 serving as one example of an X-ray irradiation unit, a line sensor 24 serving as one example of a transmitted X-ray sensing unit, an image generation unit 28b, an inspection unit 28c, a position information generation unit 28e, a reference signal sending unit 28g serving as one example of a first sending unit, and a position information sending unit 28f serving as one example of a second sending unit. The conveying unit 10 continuously conveys a large number of inspection objects P at random positions. The X-ray irradiator 22 irradiates the inspection objects P on the conveying unit 10 with X-rays. The line sensor 24 senses X-rays transmitted through the inspection objects P. The image generation unit 28b generates a transmitted X-ray image based on a sensing result from the line sensor 24. The inspection unit 28c inspects for poor quality in the inspection objects P based on the transmitted X-ray image. The position information generation unit 28e, based on an inspection result from the inspection unit 28c, generates position information E relating to positions of the inspection objects P determined to be poor quality on the conveying unit 10. The reference signal sending unit 28g sends a fixed-interval reference signal S, which is issued every time the conveying unit 10 advances a distance 2L, to a robot control unit 40 that controls the action of a robot 30. The position information sending unit 28f sends the position information E to the robot control unit 40. The robot 30 has a suction ejector 34a as a removal mechanism for removing the inspection objects P. The robot 30 can move the suction ejector 34a in at least a first direction D1 orthogonal to a conveying direction D2 of the conveying unit 10, and by using the inspection unit 28c, the robot 30 takes the inspection objects P determined by the inspection unit 28c to be poor quality away from the conveying unit 10 using the suction ejector 34a. The robot control unit 40 controls the action of the robot 30 so that the suction ejector 34a comes near to and takes away the inspected object P determined by the inspection unit 28c to be poor quality.

(4-11) An X-ray inspection method of the present embodiment comprises an X-ray irradiation step, a transmitted X-ray sensing step, an image generation step, an inspection step, a position information generation step, a sending step, and a control step. In the X-ray irradiation step, X-ray is irradiated to a conveying unit 10 that continuously conveys a large number of inspection objects P at random positions. In the transmitted X-ray sensing step, transmitted X-rays transmitted through the inspection objects P are sensed. In the image generation step, a transmitted X-ray image is generated based on a result of sensing the transmitted X-rays. In the inspection step, poor quality in the inspection objects P is inspected based on the transmitted X-ray image. In the position information generation step, based on an inspection result from the inspection step, position information E relating to the positions of the inspection objects P determined to be poor quality on the conveying unit 10 is generated. In the sending step, the position information E and a fixed-interval reference signal S issued every time the conveying unit 10 advances a distance 2L are sent to a robot control unit 40 that controls the action of a robot 30. The robot 30 has a suction ejector 34a as a removal mechanism for removing the inspection objects P. The robot 30 can move the suction ejector 34a in at least a first direction D1 orthogonal to a conveying direction D2 of the conveying unit 10, and, by using the suction ejector 34a, takes the inspected object P determined in the inspection step to be poor quality away from the conveying unit 10. In the control step, the robot control unit 40, based on at least the reference signal S and the position information E, controls the action of the robot 30 such that the suction ejector 34a comes near to and takes away the inspected object P determined in the inspection step to be poor quality.

### (5) Modifications

Modifications of the present embodiment are presented below. Parts or all of individual modifications may be combined with other modifications as appropriate as long as the modifications do not contradict each other.

### (5-1) Modification A

In the above embodiment, there is one robot 30, but this example is not provided by way of limitation; the X-ray inspection system 100 may have a plurality of robots 30. For example, individual robots 30 may be controlled so as to take away the inspection objects P in regions that differ in the first direction D1.

### (5-2) Modification B

In the above embodiment, the robot 30 uses suction to remove the inspection objects P via the suction unit 34, but the robot 30 may take the inspection objects P away from the conveying unit 10 via a means other than suction. For example, the robot 30 may have a gripper that grips the inspection objects P or a suction cup that holds the inspection objects P by suction, and the robot 30 may grip poor-quality inspection objects P on the conveying unit 10 to take away the objects from the conveying unit 10. In a case of gripping a poor-quality inspected object P on the conveying unit 10, a series of actions is required; namely, gripping the inspected object P, moving the inspected object P, and releasing the grip on the inspected object P. Therefore, it is generally more efficient to use suction to remove inspection objects P.

### (5-3) Modification C

In the above embodiment, a case was described in which the rotational speed of the conveyor motor 14 (the conveying velocity of the conveying unit 10) can be varied, but the rotational speed may be constant. In this case, the conveying unit control unit 28a does not control the rotational speed of the conveyor motor 14, and the inspection objects P are conveyed at a constant velocity. In addition, when the inspection objects P are always conveyed at a constant velocity, there is no particular need for the image generation unit 28b to correct the transmitted X-ray image in accordance with the conveying velocity of the conveying unit 10 or for the command revision unit 44 to perform the command revision process.

### (5-4) Modification D

In the above embodiment, a case was described in which the rotational speed of the conveyor motor 14 (the conveying velocity of the conveying unit 10) is changed in two levels, but this example is not provided by way of limitation; the rotational speed of the conveyor motor 14 may be changed in multiple levels. For example, the rotational speed of the conveyor motor 14 may be changed in three or more levels based on the counting result from the counting unit 28d.

### (5-5) Modification E

In the above embodiment, a mechanism whereby the length of the belt conveyor 12 can be varied by the extension/retraction drive unit 18 was described as an article removal apparatus, but this example is not provided by way of limitation. For example, another type of article removal apparatus, such as a conveyor that tilts a conveyor downward to drop the inspection objects P, may be used as the article removal apparatus.

In addition, in the above embodiment, a case was described in which an article removal apparatus is provided, but this example is not provided by way of limitation; installation of the article removal apparatus may be omitted. In this case, for example, when the quantity of inspection objects P determined to be poor quality exceeds a first threshold value N1, the X-ray inspection system 100 may temporarily stop the conveying of inspection objects P performed by the conveying unit 10 so that a worker, etc., can remove the inspection objects P.

### (5-6) Modification F

In the above embodiment, the robot 30 moves the suction ejector 34a, which services as a removal mechanism, in a direction parallel to the conveying direction D2 as well as in the first direction D1 orthogonal to the conveying direction D2, but this example is not provided by way of limitation. For example, the robot 30 may be capable of moving the suction ejector 34a in only the first direction D1.

From the standpoint of suppressing leftover inspection objects P determined to be poor quality, the suction ejector 34a can preferably move not only in the first direction D1 but also in a direction parallel to the conveying direction D2.

### INDUSTRIAL APPLICABILITY

The present invention is widely applicable and useful in X-ray inspection systems in which an X-ray inspection is performed on a large number of articles continuously conveyed by a conveying unit, and articles assessed to be poor quality are rejected from the conveying unit as a result of the X-ray inspection.

### REFERENCE SIGNS LIST

- 10: Conveying unit
- 18: Extension/retraction drive unit (article removal apparatus)
- 22: X-ray irradiator (X-ray irradiation unit)
- 24: Line sensor (transmitted X-ray sensing unit)
- 28a: Conveying unit control unit (velocity control unit, second control unit)
- 28b: Image generation unit
- 28c: Inspection unit
- 28d: Counting unit
- 28e: Position information generation unit
- 28f: Position information sending unit (second sending unit)
- 30: Robot
- 34a: Suction ejector (removal mechanism)
- 40: Robot control unit (first control unit, control unit)
- 100: X-ray inspection system
- 200: X-ray inspection apparatus
- D1: First direction
- D2: Conveying direction
- E: Position information
- P: Inspection object (article)
- S: Reference signal

### CITATION LIST

### PATENT LITERATURE

Patent Literature 1: Japanese Laid-open Patent Publication No. 2004-279059

## Claims

1. An X-ray inspection system comprising:
a conveying unit configured to continuously convey a large number of articles at random positions;
an X-ray irradiation unit configured to irradiate the articles on the conveying unit with X-rays;
a transmitted X-ray sensing unit configured to sense X-rays transmitted through the articles;
an image generation unit configured to generate a transmitted X-ray image based on a sensing result from the transmitted X-ray sensing unit;
an inspection unit configured to inspect for poor quality in the articles based on the transmitted X-ray image;
a position information generation unit configured to generate, based on an inspection result from the inspection unit, position information relating to a position of the article determined to be poor quality on the conveying unit;
a robot having a removal mechanism for removing the articles, configured to move the removal mechanism in at least a first direction orthogonal to a conveying direction of the conveying unit, and configured to take, by using the removal mechanism, the article determined by the inspection unit to be poor quality away from the conveying unit; and
a first control unit configured to control, based on at least the position information and a fixed-interval reference signal issued every time the conveying unit advances a first distance, the action of the robot so that the removal mechanism comes near to and takes away the articles determined by the inspection unit to be poor quality.

2. The X-ray inspection system according to claim 1, wherein
the robot is also configured to move the removal mechanism in a direction parallel to the conveying direction of the conveying unit.

3. The X-ray inspection system according to the claim 1 or 2, further comprising
a counting unit configured to count, based on the result of the inspection of the inspection unit, the number of articles determined to be poor quality and present in a first predetermined region of the conveying unit.

4. The X-ray inspection system according to claim 3, further comprising
a velocity control unit configured to change a conveying velocity of the conveying unit, the velocity control unit configured to control the conveying velocity based on a counting result from the counting unit.

5. The X-ray inspection system according to claim 4, wherein
the image generation unit is configured to correct the transmitted X-ray image in accordance with the conveying velocity of the conveying unit.

6. The X-ray inspection system according to any one of claims 3 to 5, further comprising
an article removal apparatus configured to collectively take away the articles present on the conveying unit in a second predetermined region in the conveying direction, and
a second control unit configured to control the action of the article removal apparatus,
the second control unit is configured to activate the article removal apparatus in a case where the number of articles determined to be poor quality and present in the first predetermined region, counted by the counting unit, exceeds a predetermined value.

7. The X-ray inspection system according to any one of claims 1 to 6, wherein
the first control unit is configured to control the action of the robot such that a movement distance of the removal mechanism that takes away the articles determined to be poor quality reaches a minimum in a case where three or more articles determined to be poor quality are present in a predetermined region of the conveying unit.

8. An X-ray inspection system according to any one of claims 1 to 7, wherein
at the same point in time, the conveying velocity of the conveying unit in the region irradiated with X-rays by the X-ray irradiation unit and the conveying velocity of the conveying unit in the region where the robot takes away the article are the same.

9. An X-ray inspection system according to any one of claims 1 to 8, wherein
the removal mechanism is configured to use suction to remove the articles determined to be poor quality.

10. An X-ray inspection apparatus comprising:
a conveying unit configured to continuously convey a large number of articles at random positions;
an X-ray irradiation unit configured to irradiate the articles on the conveying unit with X-rays;
a transmitted X-ray sensing unit configured to sense X-rays transmitted through the articles;
an image generation unit configured to generate a transmitted X-ray image based on a sensing result from the transmitted X-ray sensing unit;
an inspection unit configured to inspect for poor quality in the articles based on the transmitted X-ray image;
a position information generation unit configured to generate, based on an inspection result from the inspection unit, position information relating to a position of the article determined to be poor quality on the conveying unit;
a first sending unit configured to send a fixed-interval reference signal, which is issued every time the conveying unit advances a first distance, to a control unit that controls the action of a robot, the robot having a removal mechanism for removing the article, configured to move the removal mechanism in at least a first direction orthogonal to a conveying direction of the conveying unit, and configured to take, by using the removal mechanism, the article determined by the inspection unit to be poor quality away from the conveying unit, the control unit configured to control the action of the robot such that the removal mechanism comes near to and takes away the article determined by the inspection unit to be poor quality; and
a second sending unit configured to send the position information to the control unit.

11. An X-ray inspection method comprising:
an X-ray irradiation step in which X-rays is irradiated to a conveying unit that continuously conveys a large number of articles at random positions;
a transmitted X-ray sensing step in which transmitted X-rays transmitted through the articles are sensed;
an image generation step in which a transmitted X-ray image is generated based on a result of sensing the transmitted X-rays;
an inspection step in which poor quality in the articles is inspected based on the transmitted X-ray image;
a position information generation step in which, based on an inspection result from the inspection step, position information relating to a position of the article determined to be poor quality on the conveying unit is generated;
a sending step in which the position information and a fixed-interval reference signal issued every time the conveying unit advances a first distance are sent to a control unit that controls the action of a robot that has a removal mechanism for removing the article, that is configured to move the removal mechanism in at least a first direction orthogonal to a conveying direction of the conveying unit, and that is configured to take, by using the removal mechanism, the article, determined to be poor quality in the inspection step, away from the conveying unit; and
a control step in which the control unit, based on at least the reference signal and the position information, controls the action of the robot such that the removal mechanism comes near to and takes away the article determined to be poor quality in the inspection step.
